(19) Europäisches Patentamt
European Patent Office
Office européen des brevets

(11) **EP 3 785 089 B1**

(12) **EUROPÄISCHE PATENTSCHRIFT**

(45) Veröffentlichungstag und Bekanntmachung des Hinweises auf die Patenterteilung:
**06.12.2023 Patentblatt 2023/49**

(21) Anmeldenummer: **19719501.9**

(22) Anmeldetag: **23.04.2019**

(51) Internationale Patentklassifikation (IPC):
***B22F 10/85*** (2021.01)

(52) Gemeinsame Patentklassifikation (CPC):
(C-Sets verfügbar)
**G05B 19/4099; B22F 10/36; B22F 10/80; B22F 12/13; B22F 12/90; B29C 64/153; B29C 64/393; B33Y 30/00; B33Y 50/02; G02B 27/0927;** B22F 10/28; B22F 10/32; B22F 10/366; B22F 10/368; B22F 2999/00; (Forts.)

(86) Internationale Anmeldenummer:
**PCT/EP2019/060392**

(87) Internationale Veröffentlichungsnummer:
**WO 2019/206919 (31.10.2019 Gazette 2019/44)**

(54) **VERFAHREN UND VORRICHTUNG ZUR GENERIERUNG VON STEUERDATEN FÜR EINE VORRICHTUNG ZUR ADDITIVEN FERTIGUNG**

METHOD AND DEVICE FOR GENERATING CONTROL DATA FOR AN ADDITIVE MANUFACTURING DEVICE

PROCÉDÉ ET DISPOSITIF DE GÉNÉRATION DE DONNÉES DE COMMANDE POUR UN DISPOSITIF DE FABRICATION ADDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2018 DE 102018110294**

(43) Veröffentlichungstag der Anmeldung:
**03.03.2021 Patentblatt 2021/09**

(73) Patentinhaber: **EOS GmbH Electro Optical Systems**
**82152 Krailling (DE)**

(72) Erfinder:
• **MATTES, Thomas**
**82205 Gilching (DE)**
• **AGHAJANI-TALESH, Anoush**
**81245 München (DE)**
• **HOLFELDER, Peter**
**85375 Neufahrn bei Freising (DE)**

(74) Vertreter: **Beckord & Niedlich Patentanwälte PartG mbB**
**Marktplatz 17**
**83607 Holzkirchen (DE)**

(56) Entgegenhaltungen:
**EP-A1- 2 893 994          WO-A1-2016/115284**
**DE-A1-102016 220 067**

• **PERETYAGIN P YU ET AL: "Track geometry in selective laser melting", RUSSIAN ENGINEERING RESEARCH, ALLERTON PRESS, NEW YORK, NY, US, Bd. 35, Nr. 6, 15. Juli 2015 (2015-07-15), Seiten 473-476, XP035513345, ISSN: 1068-798X, DOI: 10.3103/S1068798X15060143 [gefunden am 2015-07-15]**
• **OKUNKOVA ANNA ET AL: "Experimental Approbation of Selective Laser Melting of Powders by the Use of Non-Gaussian Power Density Distributions", PHYSICS PROCEDIA, ELSEVIER, AMSTERDAM, NL, Bd. 56, 9. September 2014 (2014-09-09), Seiten 48-57, XP029053190, ISSN: 1875-3892, DOI: 10.1016/J.PHPRO.2014.08.095**

- YU JUN ET AL: "Material Properties of Ti6Al4 v Parts Produced by Laser Metal Deposition", PHYSICS PROCEDIA, vol. 39, 1 January 2012 (2012-01-01), pages 416-424, XP055850224,
- BONSS STEFFEN ET AL: "Laser heat treatment with latest system components", HIGH POWER LASER MATERIALS PROCESSING: LASERS, BEAM DELIVERY, DIAGNOSTICS, AND APPLICATIONS, SPIE, 1000 20TH ST. BELLINGHAM WA 98225-6705 USA, vol. 8239, no. 1, 9 February 2012 (2012-02-09), pages 1-13, XP060001571, DOI: 10.1117/12.908589 [retrieved on 1901-01-01]
- Blom Antoon ET AL: "Process spread reduction of laser microspot welding of thin copper parts using real-time control", Algorithms and Technologies for Multispectral, Hyperspectral, and Ultraspectral Imagery XIX - Proceedings of SPIE, vol. 4977, 17 October 2003 (2003-10-17), pages 493-507, XP055922597, US ISSN: 0277-786X, DOI: 10.1117/12.478612 ISBN: 978-1-5106-4548-6
- ROEHLING TIEN T ET AL: "Modulating laser intensity profile ellipticity for microstructural control during metal additive manufacturing", ACTA MATERIALIA, ELSEVIER, OXFORD, GB, vol. 128, 12 February 2017 (2017-02-12), pages 197-206, XP029944469, ISSN: 1359-6454, DOI: 10.1016/J.ACTAMAT.2017.02.025
- SUNDQVIST J ET AL: "Numerical optimization approaches of single-pulse conduction laser welding by beam shape tailoring", OPTICS AND LASERS IN ENGINEERING, vol. 79, 2016, pages 48-54, XP029381344, ISSN: 0143-8166, DOI: 10.1016/J.OPTLASENG.2015.12.001
- PERETYAGIN P YU ET AL: "Track geometry in selective laser melting", RUSSIAN ENGINEERING RESEARCH, ALLERTON PRESS, NEW YORK, NY, US, vol. 35, no. 6, 15 July 2015 (2015-07-15), pages 473-476, XP035513345, ISSN: 1068-798X, DOI: 10.3103/S1068798X15060143 [retrieved on 2015-07-15]
- OKUNKOVA ANNA ET AL: "Experimental Approbation of Selective Laser Melting of Powders by the Use of Non-Gaussian Power Density Distributions", PHYSICS PROCEDIA, ELSEVIER, AMSTERDAM, NL, vol. 56, 9 September 2014 (2014-09-09), pages 48-57, XP029053190, ISSN: 1875-3892, DOI: 10.1016/J.PHPRO.2014.08.095

(52) Gemeinsame Patentklassifikation (CPC): (Forts.)
B33Y 10/00; G05B 2219/49018; Y02P 10/25

C-Sets
B22F 2999/00, B22F 10/28, B22F 2203/11;
B22F 2999/00, B22F 10/366, B22F 2203/03

**Beschreibung**

Die Erfindung betrifft ein Verfahren zur Generierung von Steuerdaten für eine Vorrichtung zur additiven Fertigung eines Fertigungsprodukts in einem Fertigungsprozess, in welchem Aufbaumaterial aufgebaut und selektiv verfestigt wird, wobei zum Verfestigen auf einem Baufeld eine Bestrahlung des Aufbaumaterials mit zumindest einem Energiestrahl erfolgt und dabei eine Auftrefffläche des Energiestrahls auf dem Baufeld bewegt wird, um das Aufbaumaterial in einem Zielbereich in und um die Auftrefffläche aufzuschmelzen. Weiterhin betrifft die Erfindung ein Verfahren zur Steuerung einer Vorrichtung zur additiven Fertigung eines Fertigungsprodukts unter Nutzung der Steuerdaten. Außerdem betrifft die Erfindung eine entsprechende Steuerdatenerzeugungsvorrichtung zur Generierung von Steuerdaten sowie eine Steuereinrichtung mit einer solchen Steuerdatenerzeugungsvorrichtung bzw. einer Schnittstelle zu einer solchen Steuerdatenerzeugungsvorrichtung, um die Steuerdaten zu übernehmen.

Bei der Herstellung von Prototypen und inzwischen auch in der Serienfertigung werden additive Fertigungsprozesse immer relevanter. Im Allgemeinen sind unter "additiven Fertigungsprozessen" solche Fertigungsprozesse zu verstehen, bei denen in der Regel auf Basis von digitalen 3D-Konstruktionsdaten durch das Ablagern von Material (dem "Aufbaumaterial") ein Fertigungsprodukt (im Folgenden auch "Bauteil" genannt) aufgebaut wird. Der Aufbau erfolgt dabei meist, aber nicht zwingend, schichtweise. Als ein Synonym für die additive Fertigung wird häufig auch der Begriff "3D-Druck" verwendet, die Herstellung von Modellen, Mustern und Prototypen mit additiven Fertigungsprozessen wird oft als "Rapid Prototyping" und die Herstellung von Werkzeugen als "Rapid Tooling" bezeichnet. Wie eingangs erwähnt, ist ein Kernpunkt die selektive Verfestigung des Aufbaumaterials, wobei diese Verfestigung bei vielen Fertigungsprozessen mit Hilfe einer Bestrahlung mit Strahlungsenergie, z. B. elektromagnetischer Strahlung, insbesondere Licht- und/oder Wärmestrahlung, aber ggf. auch mit Teilchenstrahlung wie z. B. Elektronenstrahlung erfolgen kann. Beispiele für mit einer Bestrahlung arbeitende Verfahren sind das "selektive Lasersintern" oder "selektive Laserschmelzen". Dabei werden wiederholt dünne Schichten eines meist pulverförmigen Aufbaumaterials übereinander aufgebracht und in jeder Schicht wird das Aufbaumaterial durch räumlich begrenztes Bestrahlen der Stellen, die nach der Fertigung zum herzustellenden Fertigungsprodukt gehören sollen, in einem "Schweißprozess" selektiv verfestigt, indem die Pulverkörner des Aufbaumaterials mit Hilfe der durch die Strahlung an dieser Stelle lokal eingebrachten Energie teilweise oder vollständig aufgeschmolzen werden. Nach einer Abkühlung sind diese Pulverkörner dann miteinander in einem Festkörper verbunden.

In der praktischen Anwendung bzw. in den bisher bekannten Maschinen bzw. Vorrichtungen zur additiven Fertigung werden üblicherweise Energiestrahlen mit im Wesentlichen rotationssymmetrischen Intensitätsverteilungen (auch Intensitätsprofil genannt) zum selektiven Verfestigen eingesetzt. Eine solche rotationssymmetrische Intensitätsverteilung entspricht häufig einem (kreissymmetrischen) Gaußprofil. D. h. die Intensität ist in der Mitte des Energiestrahls am höchsten und schwächt sich in alle Richtungen radial nach außen quer zur Ausbreitungsrichtung bzw. aktuellen Strahlengangrichtung des Energiestrahls (im Folgenden auch kurz "Strahlrichtung" oder "Strahlachse" genannt) gemäß einer Gaußkurve ab. Dieses Profil ist ohne weitere Maßnahmen aus den bisher verwendeten Energiestrahlquellen, beispielsweise einem üblichen Laser, erhältlich. Neueste Erkenntnisse bzw. Forschungen zeigen jedoch, dass die genaue Form der Intensitätsverteilung bzw. des Intensitätsprofils des Energiestrahls durchaus einen nicht unerheblichen Einfluss auf den gesamten Fertigungsprozess haben kann, insbesondere z. B. auf den Energieverbrauch und/oder die Qualität des Fertigungsprodukts, beispielsweise dessen Mikrostruktur. Ein Vergleich zwischen einem Laserstrahl mit einem gaußschen Intensitätsprofil und einer nicht-rotationssymmetrischen Intensitätsverteilung, nämlich einer elliptischen Intensitätsverteilung, wird beispielsweise in Tien T. Röhling et al., "Modulating laser intensity profile ellipticity for microstructural control during metal additive manufacturing" in Acta Materialia, 128 (2017), S. 197-206, beschrieben. "Track geometry in selective laser melting" von Peretyagin P Yu et al, ISSN 1068-798X, beschreibt Verbessernugen zum sog. Selective Laser Melting. "Experimental Approbation of Selective Laser Melting of Powders by the Use of Non-Gaussian Power Density Distributions" von Okunkova Anna et al, ISSN 1875-3892, beschreibt experimentelle Ergebnisse im Bereich Laserstrahlmodulation beim Selective Laser Melting. YU JUN ET AL: "Material Properties of Ti6Al4 v Parts Produced by Laser Metal Deposition", offenbahrt ein Verfahren zur Generierung von Steuerdaten für eine Vorrichtung zur additiven Fertigung eines Fertigungsprodukts in einem Fertigungsprozess.

Des Weiteren wird derzeit in der Praxis beim Lasersintern von Metallen meistens mit einem sogenannten "Tiefschweiß-Prozess" ("keyhole mode welding") gearbeitet. Ein Schweißprozess wird als Tiefschweiß-Prozess definiert, wenn sich eine Dampfkapillare, auch "Keyhole" genannt, bildet. Der auftreffende Energiestrahl, insbesondere Laserstrahl, erzeugt hierbei einen See aus geschmolzenem Material bzw. Metall. Erreicht die Seeoberfläche des Materials dessen Siedetemperatur, drückt die Dampfblase die Schmelze seitlich und nach unten weg und erzeugt so die Dampfkapillare. Der Durchmesser dieses Keyholes ist kleiner als der des Energiestrahls bzw. Laserstrahls. Die Dampfkapillare entsteht dabei auch in Abhängigkeit von der Bewegungsgeschwindigkeit des Energiestrahls, bei einem Laser typisch ab einer Intensität von 2 MW/cm$^2$ bei 1 m/Min. Je tiefer das Keyhole wird, desto größer werden die Kräfte, die es dann kollabieren lassen wollen und desto mehr Leistung des Energiestrahls wurde bereits absorbiert, so dass sich schließlich ein Gleichgewicht bei einer bestimmten, von gewissen Parametern abhängigen Tiefe einstellt.

Ein Vorteil dieses Tiefschweiß-Prozesses liegt in der hohen Tiefenwirkung. Das heißt, es lassen sich gemessen am Fokusdurchmesser deutlich höhere Eindringtiefen erzielen, als wenn eine solche Verdampfung nicht stattfinden würde. Ein Schweißprozess ohne Verdampfen wird im Folgenden auch als "Wärmeleitungsschweißen" (auch "conduction mode welding" oder "conduction laser welding") bezeichnet.

Jedoch hat ein solcher Tiefschweißprozess auch eine Vielzahl von Nachteilen:
Zum einen ist durch den Energiestrahl eine relativ hohe Verdampfungsenthalpie bereitzustellen, die etwa eine Größenordnung über der Schmelzenthalpie liegt und dem produktiven Teil des Prozesses entzogen wird. Zwar fällt die Verdampfungsenthalpie bei der Kondensation des Metalldampfes wieder an, jedoch erst an einer Position relativ weit weg von der zu fertigenden Geometrie. Die Verdampfungsenthalpie steht wegen dieser räumlichen Trennung also dem Werkstück nicht zur Verfügung. Dieser Energieverbrauch erhöht die Kosten des Energiestrahls.

Zum zweiten ist auch der verdampfte Werkstoff meist verloren, was angesichts der hohen Kosten von Metallpulver die Bauteilpreise merklich verteuern und beeinflussen kann.

Zum dritten vergrößert sich bei der Verdampfung das Volumen des Werkstoffs (bei Normalbedingungen) um etwa den Faktor 1000. Dies führt zu hohen Drücken im Metalldampf innerhalb des Keyholes, was wiederum sehr hohe Ausströmgeschwindigkeiten (in der Größenordnung Mach 0,3) des Metalldampfs aus dem Keyhole nach sich ziehen kann. Dieser High-Speed-Gas-Jet reißt benachbarte feste Partikel und/oder Tröpfchen mit sich, die mit hoher Geschwindigkeit das Schmelzbad verlassen, und bedingt so energetische und materielle Verluste. Diese Partikel und/oder Tröpfchen werden meist als "Spratzer" bezeichnet.

Zum vierten strömt das kurz nach dem Verlassen des Keyholes wieder kondensierende Metallgas in der Regel genau entgegen der Einfallsrichtung des Energiestrahls, mit dem das Kondensat daher unkontrolliert durch Absorption und Streuung interagieren kann. Zur weitgehenden Vermeidung dieser prozessrelevanten Störung kann die Strömungsrichtung des Metallgases zwar so schnell und effizient wie möglich umgeleitet werden. Dies kann mit einem tangential zum Pulverbett ausgerichteten Strömungsvorhang aus Schutzgas erfolgen, dessen Geschwindigkeit jedoch hoch genug sein muss, um die unerwünschten Effekte ausreichend zu verringern. Jedoch ist dann die Strömungsgeschwindigkeit in der Regel so hoch, dass auch relevante Mengen pulverförmigen Werkstoffs aus dem Pulverbett mitgerissen werden können, wie starker Wind auch Staub vom Boden mitreißt (Winderosion). Mittels eines Prozessgasumwälzungssystems werden in der Regel Prozessnebenprodukte bzw. Verunreinigungen, wie z. B. Metallkondensat oder Rohpulver aus der Prozesskammer abgeführt, die stromabwärts der Prozesskammer in Filtern und ggf. Abscheidern des Abluftsystems gesammelt werden können. Dieses Material ist häufig verloren und muss zudem aufwändig und kostenintensiv entsorgt werden.

Die Werkstoffverluste aus den oben erläuterten verschiedenen Verlustquellen können sich bis zum Mehrfachen des Gewichts der aufgebauten Bauteile summieren. Daher würde sich ihre Vermeidung oder deutliche Reduzierung stark kostensenkend bemerkbar machen.

In der Praxis wurde zeitweise versucht, den Prozess durch Einstellung eines variablen Fokus zu steuern. Hierbei wurde ein variabler Aufweiter genutzt, der den Fokus des Laserstrahls nach unten verschiebt, so dass der Strahl außerhalb seiner Taille mit größerem Durchmesser auf die Bearbeitungsebene trifft. Mit steigender Laserleistung wird dieses Konzept jedoch immer anfälliger auf Intensitätsschwankungen, die durch eine Verschiebung in Längsrichtung des Laserstrahls auftreten. Zudem kann mit diesem Ansatz der Fokusdurchmesser nur so groß gewählt werden, dass noch die geforderte Detailauflösung des Prozesses erreicht wird, der im Wesentlichen durch den Fokusdurchmesser, die Schichtdicke und die Pulverkorngröße bestimmt wird. Wird dann zur Erhöhung der Produktivität versucht, die Belichtungsgeschwindigkeit, d. h. die Vorschubgeschwindigkeit des Laserstrahls auf der Oberfläche zu steigern, ohne gleichzeitig den Fokusdurchmesser zu erhöhen, da dieser ja aufgrund der geforderten Detailauflösung nicht vergrößert werden kann, so führt dies zu einer Erhöhung der Intensität. Die Erhöhung der Intensität intensiviert wiederum die oben genannten unerwünschten Begleiterscheinungen des Tiefschweißprozesses. Das Keyhole wird dann tiefer und damit instabiler. Ein kollabierendes Keyhole äußert sich in einem Schmelzbad, das unkontrollierbar erstarrt und im Extremfall sogar zu Werkstoffdefekten, wie z. B. Poren, führen kann. Letztlich würde dieser Ansatz also die Energiemenge begrenzen, die pro Laserstrahl in den Werkstoff eingekoppelt werden kann. Da wiederum auch die Anzahl der eingesetzten Energiestrahlen nicht beliebig ist und nur in engen Grenzen erhöht werden kann, begrenzt der Ansatz also die Gesamtsystemproduktivität und somit auch eine Stellgröße zur Senkung der Produktionskosten.

Es ist eine Aufgabe der vorliegenden Erfindung, Verfahren zur Generierung von Steuerdaten bzw. zur additiven Fertigung eines Fertigungsprodukts sowie geeignete Vorrichtungen hierfür anzugeben, die die oben genannten Probleme adressieren.

Diese Aufgabe wird durch ein Verfahren zur Generierung von Steuerdaten gemäß Patentanspruch 1, ein Verfahren zur Steuerung einer Vorrichtung zur additiven Fertigung eines Fertigungsprodukts gemäß Patentanspruch 11, eine Steuerdatenerzeugungsvorrichtung gemäß Patentanspruch 12, eine Steuereinrichtung für eine Vorrichtung zur additiven Fertigung eines Fertigungsprodukts gemäß Patentanspruch 13 und eine Vorrichtung zur additiven Fertigung von Fertigungsprodukten gemäß Patentanspruch 14 gelöst.

Bei dem erfindungsgemäßen Verfahren werden, wie eingangs bereits erwähnt, für eine Vorrichtung zur additiven Fertigung eines Fertigungsprodukts in einem Fertigungsprozess Steuerdaten generiert. In diesem Fertigungsprozess wird Aufbaumaterial, bevorzugt Pulver, in einem Prozessraum der Vorrichtung, vorzugsweise schichtweise, aufgebaut und mittels energetischer Bestrahlung, insbesondere in den jeweiligen Schichten, selektiv verfestigt. Hierzu erfolgt auf einem Baufeld wie erwähnt eine Bestrahlung des Aufbaumaterials mit einem Energiestrahl. Dabei wird eine Auftrefffläche des Energiestrahls auf dem Baufeld bewegt. Unter einem "Bewegen" kann hierbei das übliche Ablenken des Energiestrahlbündels, z. B. durch Galvanometerspiegel, zu verstehen sein, aber auch ein Verfahren der kompletten Abstrahlabgabeeinheit, z. B. in Form einer Diodenbank, insbesondere Laserdiodenbank, oder durch eine bewegte Strahlformung.

Durch die mit dem Energiestrahl eingebrachte Energie wird das Aufbaumaterial in einem Zielbereich in der und um die Auftrefffläche aufgeschmolzen. Unter einem "Zielbereich" ist hierbei zum einen die Auftrefffläche, d. h. der Bereich, auf den der Energiestrahl auf der Oberfläche auftrifft, zu verstehen, aber auch der Bereich darunter, also in die Tiefe des Materials bzw. der Schicht hinein, ggf. aber auch eine Umgebung um diese Auftrefffläche herum, in welcher der Energiestrahl, z. B. durch Wärmeleitung im Aufbaumaterial, noch wirkt. Lediglich der Vollständigkeit halber sei noch einmal erwähnt, dass es sich bei dem Energiestrahl sowohl um Teilchenstrahlung, als auch um elektromagnetische Strahlung, wie z. B. Licht- bzw. vorzugsweise Laserstrahlung, handeln kann.

Bei den Steuerdaten kann es sich dementsprechend bevorzugt um Belichtungssteuerdaten handeln, wie beispielsweise Scandaten, die die Bewegung des Energiestrahls auf der Oberfläche definieren bzw. vorgeben, um Steuerdaten zur Einstellung der Höhe der Energie bzw. Laserintensität, Steuerdaten über die "Form" des Strahls bzw. das Strahlprofil und/oder den Fokus bzw. die Ausdehnung des Strahls senkrecht zur Strahlrichtung. Weiterhin können diese Steuerdaten aber auch - wie später noch erläutert wird - andere Steuerinformationen umfassen, wie Beschichtungssteuerdaten, die vorgeben, wie dick eine aktuelle Schicht ist, Informationen zur Steuerung von Vor- oder Nachbeheizung mit anderen Energieeintragungsmitteln, zur Eindüsung von Inertgas etc.

Ebenso sei an dieser Stelle bereits erwähnt, dass die Steuerdaten zum einen für eine "einfache" Steuerung des Prozesses dienen können, aber auch zur Regelung des Prozesses, beispielsweise indem die Steuerdaten Soll-Daten für eine weitergehende Regelung des Prozesses vorgeben. Mit anderen Worten, es können mit Hilfe des erfindungsgemäßen Verfahrens auch die benötigten Größen für einen Regler abgeleitet werden, welcher zur Rückkopplung beispielsweise Ist-Daten erhält, die mit einem Meltpool-Monitoring oder einer zeitlich aufgelösten Optical Tomography ermittelt werden.

Erfindungsgemäß werden zur Generierung der Steuerdaten für zumindest einen Bestrahlungsmodus Optimierungskriterien und/oder Neben- und/oder Randbedingungen betreffend eine lokale Zieltemperaturverteilung bzw. ein Zieltemperaturprofil in dem Zielbereich des Aufbaumaterials festgelegt, bei welchem ein Aufschmelzen des Aufbaumaterials innerhalb des Zielbereichs als Wärmeleitungsschweißen bewirkt wird. Mit anderen Worten, es werden Kriterien und Bedingungen für die Zieltemperaturverteilung so festgelegt, dass die dadurch definierte Zieltemperatur innerhalb des Zielbereichs im Prozessfenster des oben beschriebenen Wärmeleitungsschweißens liegt und ein "Umkippen" bzw. ein Übergang zum Tiefschweißprozess oder in ein undefiniertes bzw. in ein instabiles Schweißregime vermieden wird. Auf Basis dieser Optimierungskriterien und/oder Neben- und/oder Randbedingungen wird dann, bevorzugt im Rahmen eines Optimierungsprozesses, welcher später noch genauer erläutert wird, zumindest ein optimiertes Intensitätsprofil bzw. eine Intensitätsverteilung des Energiestrahls ermittelt. Dabei wird erfindungsgemäß dafür gesorgt, dass das optimierte Intensitätsprofil des Energiestrahls an der Auftrefffläche auf dem Baufeld, bezogen auf eine koaxial zum Energiestrahl verlaufende Strahlachse (bzw. eine gedachte Rotationsachse), im Wesentlichen nicht rotationssymmetrisch ist. Die Formulierung "an der Auftrefffläche" ist dementsprechend so zu verstehen, dass es sich um das Intensitätsprofil in einer gedachten Ebene senkrecht zur Einfallsrichtung kurz vor der Auftrefffläche handelt, welche in den meisten Situationen nicht dem Intensitätsprofil direkt auf der Oberfläche des Baufelds bzw. in der Arbeitsebene entspricht, da der Energiestrahl meist schräg auf das Baufeld auftrifft. Dies schließt aber nicht aus, dass im Rahmen der Ermittlung des optimierten Intensitätsprofils auch die jeweilige Schrägstellung mitberücksichtigt wird, da die Stellung der Einfallsrichtung auf dem Baufeld auch den Einfluss des optimierten Intensitätsprofils auf die lokale Zieltemperaturverteilung mit bestimmt.

Bisher werden, wie ebenfalls oben erwähnt, die Energiestrahlen so erzeugt, dass diese im Allgemeinen bezogen auf eine koaxial zu einer Strahlrichtung des Energiestrahls liegende Strahlachse rotationssymmetrisch sind, nämlich eine gaußförmige Intensitätsverteilung aufweisen. Der Begriff "im Wesentlichen nicht-rotationssymmetrisch" heißt dabei, dass es sich hierbei um solche Energiestrahlen handelt, deren Intensitätsverteilung bewusst in einem signifikanten Maße nicht-rotationssymmetrisch erzeugt bzw. durch gezielte Modifikation eines Strahls entsprechend verändert wurde (solche Intensitätsverteilungen werden im Rahmen der Erfindung also als "nicht-rotationssymmetrisch" angesehen). Nicht hierunter sind Energiestrahlen zu verstehen, die an sich eine übliche rotationssymmetrische, beispielsweise gaußförmige, Intensitätsverteilung aufweisen sollen und lediglich unerwünschte Abweichungen von der Rotationssymmetrie aufweisen, z. B. aufgrund unbeabsichtigter Verzerrungen oder sonstiger Imperfektionen des Systems zur Erzeugung und/oder zum Bewegen des Energiestrahls bzw. im Rahmen üblicher Toleranzen. Würde beispielsweise die Intensitätsverteilung des in der gewünschten Weise erzeugten Ausgangsenergiestrahls mathematisch als Funktion $I(r, \phi)$ des Ortes in Polarkoordinaten $r$ und $\phi$ (in einer Ebene senkrecht zur Strahlrichtung) beschrieben, so könnte die Intensitätsverteilung bevorzugt dann als "nicht-rotationssymmetrisch" bezeichnet bzw. definiert werden, wenn kein Ursprungspunkt innerhalb der Intensitätsverteilung gefunden werden kann, der für ein beliebiges m, unter der Bedingung m ≥ 2, und beliebiges r folgende Eigenschaft erfüllt:

$$\left| 1 - \left( \frac{I(r, \phi_0)}{I(r, \phi_0 + 360°/m)} \right) \right| < \varepsilon$$

wobei ε ≤ 0,01, vorzugsweise ε ≤ 0,05, weiter bevorzugt ε ≤ 0,1, noch weiter bevorzugt ε ≤ 0,2 gilt.

Bevorzugt ist die Intensitätsverteilung so gewählt, dass sie auch nicht-homogen ist, d. h. nicht über die gesamte Querschnittsfläche im Wesentlichen - abgesehen von üblichen Toleranzen - die gleiche Intensität aufweist.

Die auf diese Weise für den betreffenden Bestrahlungsmodus generierten Steuerdaten werden dann zur Ansteuerung und, wie erwähnt, optional auch Regelung der Vorrichtung zur additiven Fertigung in dem betreffenden Bestrahlungsmodus genutzt, damit dann die Bestrahlung des Aufbaumaterials mit einem Energiestrahl im Wesentlichen mit dem ermittelten optimierten Intensitätsprofil erfolgt. Das heißt, es wird dafür gesorgt, dass der Energiestrahl an der Auftrefffläche auf dem Baufeld dem ermittelten Intensitätsprofil entspricht oder diesem zumindest möglichst gut bis auf bestimmte Toleranzen angenähert ist, so dass dann in der Folge auch die gewünschte lokale Zieltemperaturverteilung erreicht wird (bei Einhaltung der weiteren Prozessparameter des Bestrahlungsprozesses, wie später noch erläutert wird).

Ein bevorzugter Bestrahlungsmodus, in dem das erfindungsgemäße Verfahren angewendet werden kann, ist ein sogenannter "Core-Modus", in dem das Bauteil im Inneren verfestigt wird. Daneben gibt es in vielen Produktionsverfahren noch weitere Verfestigungsmodi, wie beispielsweise einen Kontur-Modus, in dem die (äußeren) Konturen des Bauteils verfestigt werden, oder Modi zur Verfestigung von Stützstrukturen, die nicht eigentlicher Bestandteil des Bauteils sind, etc. Dies schließt aber nicht aus, dass das erfindungsgemäße Verfahren auch in den anderen Modi genutzt werden kann, wenn dies gewünscht ist.

Es sei an dieser Stelle darauf hingewiesen, dass unter "Randbedingungen" hier und im Allgemeinen solche Bedingungen zu verstehen sind, die nur mit großem Aufwand oder gar nicht beeinflussbar sind und daher als gegebene Größen bei der Ermittlung des optimierten Intensitätsprofils bzw. im Optimierungsprozess verwendet werden müssen. "Nebenbedingungen" sind dagegen meist solche Bedingungen, die sich von der eigentlichen Hauptbedingung, d. h. den eigentlichen Optimierungskriterien, unterscheiden, zusätzlich aber zu erfüllen sind und dabei oft die hauptsächlich zu erreichende Lösungsmenge der Parameter, die die Optimierungskriterien erfüllen, einschränken können. Unter einem Optimierungskriterium sind dagegen eine Funktion oder mehrere Funktionen zu verstehen, welche die zu optimierenden Parameter als Funktionsparameter enthalten. Diese Funktionen bilden einen mathematischen Zusammenhang ab, der im Rahmen eines Optimierungsprozesses optimiert werden soll, d. h. für die ein optimaler Parameterwert bzw. optimale Parameterwerte gefunden werden soll, sowie ein(e) dabei zu erreichende Zielgröße bzw. Sollwert.

Mit Hilfe des erfindungsgemäßen Verfahrens ist es möglich, den Fertigungsprozess so zu steuern, dass die eingangs genannten Probleme, welche durch den Tiefschweißprozess bedingt sind, vermieden werden können, indem eine annähernd ideale Oberflächentemperatur, beispielsweise eine gleichmäßige Temperaturverteilung, an der Oberfläche bzw. im Zielbereich um die Auftrefffläche erreicht wird. Hiermit kann zum einen der Energieeintrag maximiert werden und es werden zum zweiten, anders als bei einem bisher üblichen normalen rotationssymmetrischen Gauß-Prozess, weitere prozessrelevante Aspekte berücksichtigt. Trifft nämlich ein gaußförmiger Laserstrahl, bei dem die Intensität in der Mitte am höchsten ist und zum Rande hin glockenförmig und rotationssymmetrisch abfällt, auf das Metallschmelzbad, so führt dies zu einer Temperaturverteilung auf der Oberfläche, die entsprechend ein Maximum irgendwo im Bereich der Mitte aufweist. Dort wird dann zwangsläufig bei sukzessiver Steigerung der Leistung auch irgendwann die Verdampfung einsetzen. Durch den Abfluss von Wärme durch das Schmelzbad in den Werkstoff hinein, d. h. in die Tiefe der aktuellen Oberfläche, liegen die Temperaturen unterhalb der Schmelzbadoberfläche dann meist niedriger als an der Oberfläche. Des Weiteren ist die Oberflächenspannung der Metallschmelzen (wie die der meisten Fluide) u. a. auch temperaturabhängig. Diese lokal variierenden Oberflächenspannungen sorgen für einen Materialfluss ausgehend von Bereichen mit niedriger Oberflächenspannung hin zu Bereichen mit höherer Oberflächenspannung. Dieser Effekt wird als thermokapillare Konvektion bezeichnet (auch bekannt als Marangoni-Effekt). Sinkt beispielsweise die Oberflächenspannung mit steigender Temperatur (wobei die Temperaturabhängigkeit der Oberflächenspannung vom Material und vom verwendeten Schutzgas abhängig ist), so strömt Material von den warmen zu den kalten Bereichen der Flüssigkeitsoberfläche. Im Falle des genannten Gauß-Intensitätsprofils würde sich dementsprechend eine Strömung aus der Mitte desselben zu dessen Rändern ausbilden. Diese Strömung wird am Schmelzbadrand nach unten in tiefere Regionen des Schmelzbads umgelenkt, ist am Grund des Schmelzbades wieder in dessen Mitte, wo sie zentral wieder nach oben an die Oberfläche aufsteigt und den Kreislauf von neuem beginnt. Eine solche thermokapillare Konvektion kann im Schmelzbad Geschwindigkeiten bis hin zu 100 m/s erreichen. Simulationen ergeben unter Berücksichtigung der Zeit, in der das Material sich in der flüssigen Phase befindet, bei üblichen Belichtungsparametern, dass sich diese Kreisströmung etwa zweimal umwälzt, bevor das Metall wieder erstarrt. Je nach Vorzeichen der Marangoni-Zahl (d. h.

des jeweiligen Temperatur-/Oberflächenspannungs-gradienten) wird zusammen mit dem Material auch Wärmeenergie in die kälteren, äußeren oder tieferen Regionen des Schmelzbades transportiert. Diese Strömung stellt zudem eine Quelle für Turbulenzen dar, die sich in unruhig erstarrten Oberflächen und/oder sogar in Auswürfen von Tröpfchen aus dem Schmelzbad äußern kann.

Im Rahmen der erfindungsgemäßen Vorgehensweise, also der Optimierung des Temperaturprofils im Zielbereich, insbesondere auf dem Baufeld, mit Hilfe eines optimierten Intensitätsprofils kann durch ein geeignetes vorgegebenes Temperaturprofil bzw. durch die Vorgabe der entsprechend hierfür benötigten Optimierungskriterien und/oder Neben- und/oder Randbedingungen der Einfluss der Temperaturabhängigkeit an der Schmelzbadoberfläche sogar gezielt genutzt werden, um die Konvektion im Schmelzbad zu steuern. So sind beispielsweise gezielt Temperaturprofile einstellbar, die die thermokapillare Konvektion gegenüber der oben beschriebenen üblichen Richtung umkehren, um so einen Massetransport und somit auch einen Wärmetransport durch Konvektion in die Tiefe zu forcieren. Damit könnte die "effektive Eindringtiefe" bzw. "Schmelzbadtiefe" oder "Einschweißtiefe" erhöht werden, wodurch dickere Schichten verschmolzen werden können und gleichzeitig die "Aushärtebreite" (die "Meltpool-Breite") reduziert werden kann, was der Detailgenauigkeit zugutekommen würde, wobei unter "Aushärtebreite" die maximale Ausdehnung senkrecht zur Bewegungsrichtung des Energiestrahls auf dem Baufeld verstanden wird. Des Weiteren lässt sich, wenn gewünscht, durch eine Homogenisierung der Oberflächentemperatur die thermokapillare Konvektion auch komplett verhindern oder zumindest stark reduzieren, um so eine glattere Bauteiloberfläche zu erreichen.

Welche Strategie genau genutzt wird bzw. wie hierzu die jeweiligen Optimierungskriterien und/oder Neben- und/oder Randbedingungen definiert werden, hängt vom jeweiligen Einsatzzweck ab, also beispielsweise, um welchen Bestrahlungsmodus es sich handelt, welches Bauteil gefertigt wird, welche Bedingungen und gewünschten Bauteileigenschaften erreicht werden sollen, welche Materialien genutzt werden etc. Auf jeden Fall können mit Hilfe des erfindungsgemäßen Verfahrens Bedingungen für einen Soll-Zustand des (sich) an der Schmelzbadoberfläche einzustellenden Temperaturprofils vorgegeben werden, um so den gesamten Produktionsprozess zu optimieren.

Bei einem erfindungsgemäßen Verfahren zur Steuerung einer Produktionsvorrichtung zur additiven Fertigung eines Fertigungsprodukts werden zunächst Steuerdaten auf die erfindungsgemäße Weise generiert und diese dann genutzt, um die Vorrichtung mit den Steuerdaten zu steuern. Dabei können die Steuerdaten vorab generiert werden und als komplettes Paket bzw. eine Art "Steuerprotokoll" an die Vorrichtung übermittelt werden, die dann den Produktionsprozess durchführt. Prinzipiell wäre es aber auch möglich, Steuerdaten während des bereits laufenden Prozesses für nachfolgende Prozessschritte zu ermitteln, beispielsweise während eine Schicht verfestigt wird, die Steuerdaten für die nächste Schicht zu ermitteln und bei der Verfestigung der weiteren Schicht zu nutzen.

Ausgangsbasis für die Steuerdaten sind dabei u. a. Daten, die angeben, an welchen Stellen innerhalb des Prozessraumes bzw. des Baufelds Material verfestigt werden soll, d. h. welche Teile später zum Bauteil oder zu eventuellen Stützstrukturen oder dergleichen gehören sollen und welche Bereiche nicht. Diese Daten können beispielsweise einem digitalen 3D-Modell des zu fertigenden Objekts und/oder der Stützstrukturen entnommen werden. Sind diese Daten und weitere benötigte Informationen vorhanden, wie beispielsweise welches Material verwendet wird, welche Verfestigungsvorrichtung, insbesondere welche Art von Energiestrahl, zur Verfügung steht bzw. im Rahmen welcher Parameter dieser einstellbar ist etc., so lässt sich mit Hilfe der vorgegebenen Optimierungskriterien und/oder Neben- und/oder Randbedingungen zur Definition der lokalen Zieltemperaturverteilung das gewünschte optimierte Intensitätsprofil ermitteln, und die Steuerdaten können entsprechend ermittelt werden.

Eine erfindungsgemäße Steuerdatenerzeugungsvorrichtung zur Generierung von Steuerdaten für eine Vorrichtung zur additiven Fertigung eines Fertigungsprodukts ist so ausgebildet, dass zur Generierung der Steuerdaten für zumindest einen Bestrahlungsmodus Optimierungskriterien und/oder Neben- und/oder Randbedingungen betreffend eine lokale Zieltemperaturverteilung des Aufbaumaterials in dem Zielbereich festgelegt werden können, bei welchem ein Aufschmelzen des Aufbaumaterials innerhalb des Zielbereichs als Wärmeleitungsschweißen bewirkt wird. Beispielsweise können diese Optimierungskriterien und/oder Neben- und/oder Randbedingungen über eine Benutzerschnittstelle oder durch ein übergeordnetes Steuerprotokoll etc. vorgegeben werden.

Die Steuerdatenerzeugungsvorrichtung ist weiterhin so ausgebildet, dass sie auf Basis der Optimierungskriterien und/oder Neben- und/oder Randbedingungen zumindest ein optimiertes Intensitätsprofil des Energiestrahls ermittelt, wobei das optimierte Intensitätsprofil des Energiestrahls, wie beschrieben, an der Auftrefffläche auf dem Baufeld im Wesentlichen nicht rotationssymmetrisch ist. Dabei werden die Steuerdaten so generiert, dass bei einer (ggf. späteren) Ansteuerung der Vorrichtung zur additiven Fertigung in dem Bestrahlungsmodus die Bestrahlung des Aufbaumaterials mit einem Energiestrahl im Wesentlichen mit dem ermittelten Intensitätsprofil erfolgt. Das heißt, die Steuerdatenerzeugungsvorrichtung ist so ausgebildet, dass Steuerdaten erstellt werden, mit denen die Vorrichtung zur additiven Fertigung unter Nutzung dieser Steuerdaten entsprechend ansteuerbar ist.

Die Steuerdatenerzeugungseinrichtung kann beispielsweise Teil einer Steuereinrichtung einer solchen Produktionsvorrichtung zur additiven Fertigung eines Fertigungsprodukts sein. Sie kann aber auch eigenständig auf einem anderen Rechner realisiert werden, um die Daten dann an die Steuereinrichtung zu übergeben.

Dementsprechend weist eine erfindungsgemäße Steuereinrichtung für eine solche Vorrichtung zur additiven Fertigung eines Fertigungsprozesses eine erfindungsgemäße Steuerdatenerzeugungsvorrichtung auf oder eine Schnittstelle zu einer solchen Steuerdatenerzeugungsvorrichtung zur Bereitstellung der betreffenden Steuerdaten bzw. um die Steuerdaten von der Steuerdatenerzeugungsvorrichtung zu übernehmen, und diese Steuereinrichtung ist ausgebildet, um die Vorrichtung zur Bestrahlung des Aufbaumaterials mit dem Energiestrahl unter Nutzung dieser Steuerdaten anzusteuern.

Eine erfindungsgemäße Vorrichtung zur additiven Fertigung von Fertigungsprodukten in einem additiven Fertigungsprozess weist neben den üblichen Komponenten, wie beispielsweise eine Zuführvorrichtung zum Einbringen von Aufbaumaterial - beispielsweise in Form einer Schicht von Aufbaumaterial - in einem Prozessraum, und eine Bestrahlungsvorrichtung zum selektiven Verfestigen des Aufbaumaterials durch Bestrahlung mittels eines Energiestrahls zumindest eine solche Steuereinrichtung auf.

Es sei an dieser Stelle darauf hingewiesen, dass die erfindungsgemäße Vorrichtung auch mehrere Bestrahlungsvorrichtungen aufweisen kann, die dann entsprechend koordiniert mit den Steuerdaten angesteuert werden, um die lokale Zieltemperaturverteilung zu erreichen. Auch sei noch einmal erwähnt, dass insoweit der Energiestrahl, dessen Intensitätsprofil optimiert wird, auch aus mehreren sich überlagernden Energiestrahlen bestehen kann und dementsprechend dann dafür gesorgt wird, dass diese überlagerten Teil-Energiestrahlen gemeinsam das optimierte Intensitätsprofil aufweisen, welches dann optimal zu der gewünschten Zieltemperaturverteilung führt bzw. dafür sorgt, dass die Neben- und/oder Randbedingungen für die lokale Zieltemperaturverteilung eingehalten werden und die Optimierungskriterien soweit wie möglich erfüllt werden.

Die erfindungsgemäße Steuerdatenerzeugungseinrichtung kann in Form einer Rechnereinheit mit geeigneter Software realisiert sein. Die Rechnereinheit kann z. B. hierzu einen oder mehrere zusammenarbeitende Mikroprozessoren oder dergleichen aufweisen. Insbesondere kann sie in Form von geeigneten Softwareprogrammteilen in der Rechnereinheit einer Steuereinrichtung einer erfindungsgemäßen Produktionsvorrichtung realisiert sein. Eine weitgehend softwaremäßige Realisierung hat den Vorteil, dass auch schon bisher verwendete Rechnereinheiten, insbesondere Steuereinrichtungen von Produktionsvorrichtungen für die additive Fertigung, auf einfache Weise durch ein Software- bzw. Firmware-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer Rechnereinheit, insbesondere Steuereinrichtung, ladbar ist, mit Programmabschnitten, um alle Schritte des erfindungsgemäßen Verfahrens auszuführen, wenn das Programm in der Rechnereinheit bzw. Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten, auch Hardware-Komponenten, wie z. B. Hardware-Schlüssel (Dongles etc.) zur Nutzung der Software, umfassen. Zum Transport zur Rechnereinheit bzw. Steuereinrichtung und/oder zur Speicherung an oder in der Rechnereinheit bzw. Steuereinrichtung kann ein computerlesbares Medium, beispielsweise ein Memorystick, eine Festplatte oder ein sonstiger transportabler oder fest eingebauter Datenträger dienen, auf welchem die von einer Rechnereinheit, insbesondere der Steuereinrichtung, einlesbaren und ausführbaren Programmabschnitte des Computerprogramms gespeichert sind.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Um einen Energiestrahl mit dem ermittelten optimierten Intensitätsprofil zu erzeugen, gibt es verschiedene Möglichkeiten. Beispielsweise könnte die gewünschte Strahlformung bereits bei der Erzeugung des Energiestrahls erfolgen.

So könnte beispielsweise ein Laser mit vielen Laser-Kanälen aufgebaut sein, die kohärent kombiniert werden können, sodass sie zusammen als eine einzelne kohärente Laserquelle wirken und funktionieren. Dies könnte inhärent die Möglichkeit bieten, jeden einzelnen Laser-Kanal zusätzlich hochdynamisch in Phase und Amplitude zu modulieren, um die gewünschte variable Strahlformung, insbesondere das gewünschte Intensitätsprofil, zu erreichen.

Weiterhin kann ein von einer Energiestrahlquelle erzeugter beliebiger, also auch zunächst rotationssymmetrischer, Energiestrahl erst nachträglich innerhalb einer Strahlformungseinrichtung "geformt" bzw. modifiziert werden, um das gewünschte Strahlprofil zu erhalten. Auch eine solche Strahlformungseinrichtung kann auf verschiedene Weise realisiert werden.

Vorzugsweise kann die Strahlformungseinrichtung zumindest ein, durch die Steuereinrichtung ansteuerbares, mikrooptisches Element aufweisen. Besonders bevorzugt ist dabei ein sogenanntes diffraktives optisches Element (im Englischen auch als "Diffractive Optical Element", DOE, bekannt).

DOEs können reflektiv oder transmissiv arbeiten und die Wellenfront eines einfallenden Strahls durch lokale Modulation von Phase und/oder Amplitude der reflektierten oder transmittierten Teilstrahlen verändern.

Unter aktiven DOEs können dagegen die oben bereits erwähnten Anordnungen (z. B. Arrays) von multiplen, grundsätzlich kohärenten Laserquellen verstanden werden, bei denen Phase und/oder Amplitude eines jeden einzelnen Laserstrahls unabhängig voneinander, aber relativ zueinander gesteuert werden können, wodurch sich im Fernfeld ebenfalls eine Manipulation der sich aus der Überlagerung der einzelnen Laserstrahlen ergebenden Intensitätsverteilung erreichen lässt.

DOEs eignen sich dagegen insbesondere für eine Verwendung in einer Strahlformungseinrichtung, die einen bereits erzeugten eingehenden Energiestrahl (nachträglich) modifizieren soll.

Bevorzugt umfasst eine Strahlformungseinrichtung zumindest einen Strahlteiler, der beispielsweise auch als DOE aufgebaut sein kann, um einen "Eingangs-Energiestrahl" in mindestens zwei Strahlen aufzuteilen. Der Strahlteiler kann vorzugsweise einen Dünnschicht-Polarisator umfassen. Ein solcher Dünnschicht-Polarisator erzeugt zwei linear polarisierte Teilstrahlen, für die es dann wieder verschiedene Möglichkeiten zur Modifikation der Intensitätsverteilung gibt.

Die Strahlformungseinrichtung kann hierzu beispielsweise zumindest ein Strahlformungselement aufweisen. Vorzugsweise weist die Strahlformungseinrichtung mehrere solcher Strahlformungselemente auf, beispielsweise den verschiedenen Teilstrahlen, insbesondere den linear polarisierten Teilstrahlen, zugeordnete Strahlformungselemente. Dies schließt aber nicht aus, dass auch einem Teilstrahl mehrere Strahlformungseinrichtungen zugeordnet sein können.

Besonders bevorzugt umfasst oder ist zumindest eines der Strahlformungselemente, ganz besonders bevorzugt alle Strahlformungselemente, ein LCoS-Display (LCoS = Liquid Crystal on Silicon, auch als LCoS-Micro-Display bezeichnet). Mit solchen LCoS-Displays können relativ einfach linear polarisierte Strahlen in gewünschter Weise geformt werden bzw. deren Intensitätsverteilung in einer senkrecht zur Strahlachse liegenden Ebene verändert werden. Ein LCoS-Display ist ein weiteres Beispiel für ein passives DOE im oben beschriebenen Sinne.

Die Strahlformungseinrichtung weist zudem vorzugsweise einen Strahlkombinator auf, um zumindest zwei Energiestrahlen zu (re-)kombinieren.

Dieser Strahlkombinator kann vorzugsweise ebenfalls einen Polarisator, besonders bevorzugt einen Dünnschicht-Polarisator, umfassen. Mit einem solchen Strahlkombinator ist es also möglich, beispielsweise die zwei linear polarisierten Teilstrahlen nach ihrer Modifikation durch die Strahlformungselemente wieder zu kombinieren und damit wieder einen Ausgangs-Energiestrahl zu erzeugen, dessen Intensitätsprofil in der gewünschten Weise dynamisch modifiziert wurde.

Um mit einer Strahlformungseinrichtung einen Energiestrahl mit der gewünschten, im Wesentlichen nicht-rotationssymmetrischen Intensitätsverteilung zu erzeugen, weist diese Strahlformungseinrichtung vorzugsweise zumindest eine Steuerschnittstelle auf und ist weiter bevorzugt so ausgebildet, dass die Intensitätsverteilung des Energiestrahls mittels der Steuervorrichtung zumindest in einer gewissen Bandbreite dynamisch modifizierbar ist. Dies ermöglicht es, über die Steuereinrichtung permanent die nicht-rotationssymmetrische Intensitätsverteilung an die aktuellen Bedürfnisse quasi "on the fly" anzupassen und somit in jedem verfestigten Bereich die optimalen strukturellen Ergebnisse zu erzielen.

Der Eingangs-Energiestrahl kann hierbei von einer beliebigen Strahlquelle kommen. Prinzipiell kann er auch wie erwähnt ein Bündel von einander überlagerten Teilstrahlen umfassen. Bevorzugt, nicht zwingend, handelt es sich hierbei um einen Laserstrahl.

Ebenso ist es auch möglich, bei einem Energiestrahl mit nicht-rotationssymmetrischer Intensitätsverteilung die Intensitätsverteilung noch in einer Strahlformungseinrichtung zu ändern, d. h. die Verfahren zu kombinieren.

Vorzugsweise wird auf Basis der Optimierungskriterien und/oder der Neben- und/oder Randbedingungen zusätzlich zumindest einer der weiteren folgenden Prozessparameter, vorzugsweise mehrere dieser Prozessparameter, bestimmt (wobei es sich hier zum Teil um weitere Bestrahlungsprozessparameter, aber auch um andere Prozessparameter handeln kann):

- Strahlungsintensität des Energiestrahls. Hierzu können z. B. absolute Werte des Strahlprofils festgelegt werden, beispielsweise welchen Maximalwert oder Minimalwert die Strahlungsintensität aufweist, wobei es reicht, einen dieser Werte festzulegen, da der andere Wert dann ja durch das Strahlprofil festgelegt ist. Insbesondere wird hierbei also auch die Leistung des Energiestrahls mit bestimmt;

- zumindest eine Strahlausdehnung in mindestens eine Richtung quer zur Einstrahlungsrichtung, also beispielsweise einen Strahldurchmesser bzw. eine Strahlbreite, wobei unter einer Strahlbreite immer die Ausdehnung senkrecht zur aktuellen Bewegungsrichtung der Auftrefffläche auf dem Baufeld zu verstehen ist. Alternativ oder zusätzlich kann auch die komplette Form des Energiestrahls an der Auftrefffläche auf dem Baufeld bestimmt werden. Die Strahlausdehnung kann beispielsweise durch eine Fokusverstellung beeinflusst werden;

- die Bewegungsgeschwindigkeit der Auftrefffläche des Energiestrahls auf dem Baufeld, d. h. die Scan-Geschwindigkeit, welche auch ortsabhängig modifiziert werden kann, d. h. nicht konstant sein muss;

- eine Schichtdicke der jeweils aufgetragenen bzw. zu verfestigenden Baumaterialschicht;

- Parameter zur Festlegung der Bestrahlungsstrategie. Die selektive Bestrahlung bzw. die Bewegung der Auftrefffläche des Energiestrahls auf dem Baufeld erfolgt meist gemäß einer geeigneten "Bestrahlungsstrategie". So sind in der Regel während eines Verfestigungsprozesses größere zweidimensionale Bereiche, d. h. größere Flächen auf dem Baufeld zu bestrahlen. Unabhängig davon, wie der Energiestrahl erzeugt und der Auftreffpunkt auf dem Baufeld genau verfahren wird, hat es sich als vorteilhaft erwiesen, zumindest solche größeren zu bestrahlenden Bereiche zunächst gemäß einem ausgewählten Muster virtuell "aufzuteilen", beispielsweise in virtuelle "Streifen", ein Rautenmuster, ein Schachbrettmuster oder dergleichen. Die einzelnen Flächen dieses Musters, also definierte Teilbereiche, beispielsweise geometrisch normierte Flächenstücke wie Streifen oder Felder, werden dann meist in Form einer sogenannten "Schraffur" (im Allgemeinen und im Folgenden auch "Hatch" genannt) mit dem Energiestrahl abgefahren. Bei einem Streifenmuster wird also das Baumaterial - makroskopisch betrachtet - entlang zueinander paralleler Streifen nach und nach verfestigt und im Detail - mikroskopisch betrachtet - erfolgt dabei die Bewegung der Auftrefffläche des Energiestrahls auf dem Baufeld entlang eng aneinander liegender Schraffurlinien, welche quer zur Erstreckungsrichtung der jeweiligen Bestrahlungsstreifen in den Grenzen des Bestrahlungsstreifens hin und her verlaufen. Als Bestrahlungsstrategie-Parameter können dabei beispielsweise ein Bestrahlungsmuster und/oder eine Hatchingstrategie gewählt werden, wie beispielsweise, ob mit wechselnder Hatchingrichtung (alternierende Bestrahlung) oder mit gleichbleibender Hatchingrichtung (unidirektionale Bestrahlung, d. h. mit einem Rücksprung von einem Hatchende zum Anfang des darauffolgenden Nachbar-Hatches im Bestrahlungsstreifen) gearbeitet wird.

Die weiteren Prozessparameter können dabei als variabel, d. h. auch innerhalb des Optimierungsprozesses beispielsweise optimierbare, Eingangsgrößen berücksichtigt werden. Dies ist in vielen Fällen auch sinnvoll, insbesondere soweit es die Strahlungsintensität und die Strahlausdehnung betrifft, da diese letztlich gemeinsam mit dem Strahlprofil die Temperaturverteilung am Wesentlichsten beeinflussen. Andere dieser Parameter können aber auch vorab festgelegt werden, z. B. als fixe Zielgröße, wie beispielsweise die Schichtdicke oder die Bestrahlungsstrategie. In diesem Fall kann es sich anbieten, die betreffenden Parameter selber zu Randbedingungen zu machen, wenn diese zwingend eingehalten werden sollen.

Zur Festlegung der Optimierungskriterien und/oder Neben- und/oder Randbedingungen gibt es verschiedene Möglichkeiten:

Bei einer bevorzugten Ausführung des Verfahrens werden der Zielbereich sowie optional eine definierte Umgebung um den Zielbereich, vorzugsweise eine Umgebung von maximal in etwa dem Fünffachen, besonders bevorzugt maximal in etwa dem Dreifachen der Ausdehnung der Auftrefffläche selbst virtuell in räumlich unterschiedliche Prozesszonen aufgeteilt, wobei die Ausdehnung der Auftrefffläche so definiert ist, dass innerhalb der Auftrefffläche 99 % der Strahlungsleistung des Energiestrahls auf dem Baufeld auftrifft. Dabei wird die relative räumliche Anordnung der Prozesszonen zueinander bezüglich eines in Bezug auf den Energiestrahl feststehenden Koordinatensystems definiert, d. h. das Koordinatensystem wird mit dem Energiestrahl auf der Baufeldoberfläche mitbewegt und rotiert auch mit dem Energiestrahl bei einer Bewegungsänderung mit. Dabei liegt vorzugsweise die z-Koordinate senkrecht auf dem Baufeld am Schnittpunkt der Strahlachse mit der Baufeldoberfläche bzw. Arbeitsebene und die x- und y-Koordinaten stehen senkrecht dazu, beispielsweise die x-Koordinate immer in Bewegungsrichtung der Auftrefffläche des Energiestrahls auf dem Baufeld und die y-Koordinate senkrecht dazu.

Bei den räumlich unterschiedlichen Prozesszonen kann es sich beispielsweise um eine Schmelzzone handeln, auf welche der Energiestrahl direkt einwirkt und dort das Baumaterial aufschmilzt, und eine sich darum herum befindende Wärmeeinflusszone. Z. B. kann in der Wärmeeinflusszone die Temperatur gegenüber dem noch nicht erhitzten bzw. schon abgekühlten Material noch erhöht sein, beispielsweise das 0,3fache der absoluten Solidus-Temperatur betragen. Auch diese Zonen können wieder in Unterzonen unterteilt werden, wie dies später noch anhand von mehreren Ausführungsbeispielen genauer erläutert wird.

Vorzugsweise sind dabei verschiedenen Prozesszonen, d. h. unterschiedlichen Teilbereichen im Zielbereich und der Umgebung, unterschiedliche Optimierungskriterien und/oder Neben- und/oder Randbedingungen zugeordnet. Auch hierfür werden noch Beispiele gegeben. Durch die Unterteilung in verschiedene Prozesszonen ist es also möglich, die Optimierungskriterien bzw. Neben- und/oder Randbedingungen sehr genau anzupassen und so eine noch bessere optimierte Intensitätsverteilung zu bestimmen, die den Produktionsprozess weiter fördert.

Wie bereits erwähnt, können die Optimierungskriterien und/oder die Neben- und/oder Randbedingungen betreffend die lokale Zieltemperaturverteilung vom Material abhängen. So sollte z. B. für eine möglichst effektive Prozessführung im Prozessfenster des Wärmeleitungsschweißens darauf geachtet werden, dass die Temperatur zwar nahe an der Verdampfungstemperatur des verwendeten Materials bzw. der niedrigsten Verdampfungstemperatur einer Materialkomponente bei einer verwendeten Kombination (z. B. Legierung) von Materialien liegt, aber nicht darüber.

Daher wird bevorzugt bei der Festlegung der Optimierungskriterien und/oder Neben- und/oder Randbedingungen betreffend die lokale Zieltemperaturverteilung zumindest ein Materialkennwert des Aufbaumaterials berücksichtigt. Besonders bevorzugt wird zumindest einer der folgenden Parameter, vorzugsweise mehrere dieser Parameter, berücksichtigt:

- Kennwerte zur Beschreibung der Phasenumwandlungen des Aufbaumaterials. Hierzu zählen z. B. die Keimbildungsrate und/oder die Keimwachstumsrate;

- Abkühlungsraten und Temperaturhaltepunkte, z. B. zur Bildung und/oder Vermeidung von Phasenumwandlungen des Aufbaumaterials;

- räumliche Temperaturgradienten, insbesondere zulässige räumliche Temperaturgradienten zur Vermeidung von Schädigungen, die durch im Rahmen des Prozesses indizierte Eigenspannungen hervorgerufen werden;

- Wärmeleitkoeffizienten des Aufbaumaterials;

- Wärmekapazität des Aufbaumaterials;

- Dichte des Aufbaumaterials;

- Thermische Leitfähigkeit. Diese wird berechnet aus dem Quotienten des Wärmeleitkoeffizienten und dem Produkt aus Wärmekapazität und Dichte des Aufbaumaterials;

- Oberflächenspannung des Aufbaumaterials.

- Phasenumwandlungsenthalpien des Aufbaumaterials, d. h. die Energie, die zum Auslösen einer Phase benötigt oder bei der Bildung einer Phase freigesetzt wird;

- Siede- bzw. Verdampfungstemperatur des Aufbaumaterials oder zumindest einer seiner Komponenten, vorzugsweise die niedrigste Siede- bzw. Verdampfungstemperatur, sofern das Aufbaumaterial mehrere Komponenten hat.

- Schmelztemperatur des Aufbaumaterials oder zumindest einer seiner Komponenten, vorzugsweise die niedrigste Schmelztemperatur, sofern das Aufbaumaterial mehrere Komponenten hat.

Bei den Materialkennwerten, welche temperatur- und phasenabhängig sind, ist es prinzipiell auch möglich, eine Vielzahl entsprechender Materialkennwerte bzw. Tabellen oder Funktionen vorzugeben, die den jeweiligen Materialkennwert in Abhängigkeit von Temperatur und Phase definieren. Dies betrifft z. B. den Wärmeleitkoeffizienten, die Wärmekapazität, die Dichte oder die thermische Leitfähigkeit sowie die Oberflächenspannung.

Grundsätzlich können bei der Angabe von Materialkennwerten auch eventuelle Veränderungen der genannten Parameter durch eine Reaktion mit Schutzgasatmosphäre berücksichtigt werden. D. h. die Kennwerte werden entsprechend, z. B. mit geeigneten Korrekturfunktionen, korrigiert oder es werden Tabellen zur Verfügung gestellt, mit denen die passenden Werte in Abhängigkeit vom Schutzgas etc. herausgesucht werden können.

Vorzugsweise bezieht sich zumindest ein Optimierungskriterium auf zumindest einen der folgenden Parameter:

- lokale Temperatur am jeweiligen Ort auf dem Baufeld. Die Temperatur sollte bevorzugt möglichst nah an der Verdampfungstemperatur sein bzw. an der niedrigsten Verdampfungstemperatur bei einem Material, welches mehrere Komponenten umfasst, aber an keinem Ort darüber. Auf diese Weise kann sicher erreicht werden, dass der Prozess im Prozessfenster des Wärmeleitungsschweißens bleibt, aber dennoch sehr effektiv ist, da hohe Energien eingebracht werden können.

- Lokaler Temperaturgradient am jeweiligen Ort auf dem Baufeld. Auch dieser sollte möglichst nah an einem lokalen Ziel-Temperaturgradienten sein.

- Eine Abkühlgeschwindigkeit. Diese sollte möglichst nah an einer Ziel-Abkühlrate liegen.

- Eine Leistung des Energiestrahls. Diese sollte möglichst niedrig sein, um Energie einzusparen.

- Eine Bewegungsgeschwindigkeit der Auftrefffläche des Energiestrahls auf dem Baufeld, d. h. die Scan-Geschwindigkeit. Diese sollte wiederum möglichst hoch sein, um eine hohe Produktionsrate zu erreichen. Da eine möglichst niedrige Leistung des Energiestrahls und gleichzeitig eine hohe Scan-Geschwindigkeit des Energiestrahls hinsichtlich der einbringbaren Energie kontraindiziert sind, wird vorzugsweise im Rahmen eines Optimierungsverfahrens ein Paretooptimum gefunden werden.

Für zu verschiedenen Optimierungskriterien gehörige Zielgrößen werden nachfolgend noch Beispiele gegeben.

Vorzugsweise werden zur Festlegung der Optimierungskriterien und/oder Neben- und/oder Randbedingungen betreffend die lokale Zieltemperaturverteilung zumindest eine der folgenden Zielgrößen, vorzugsweise mehrere dieser Zielgrößen, bestimmt:

- Eine zulässige zeitliche Temperaturentwicklung. Beispielsweise könnten hierzu eine Zielabkühlrate und/oder bestimmte Temperaturhaltepunkte vorgegeben werden. Hierbei kann beachtet werden, dass die Temperaturentwicklung für unterschiedliche Prozesszonen, wie sie oben genannt wurden, unterschiedlich sein kann. Insbesondere ist die Temperaturentwicklung in der Schmelzzone meist anders als in einer benachbarten Wärmeeinflusszone.

- Lokale örtliche Zieltemperaturgradienten. Auch dies kann für unterschiedliche Prozesszonen unterschiedlich festgelegt werden.

- Eine Ziel-Schmelzbadtiefe, d. h. die angestrebte Schmelzbadtiefe bzw. Einschweißtiefe, die insbesondere wiederum von der Schichtdicke abhängen kann.

- Eine Ziel-Oberflächengüte. Beispielsweise könnte als Zielgröße die Vermeidung von Effekten durch thermokapillare Konvektion vorgegeben werden und/oder eine maximal zulässige lokale Krümmung der Oberfläche.

- Eine Ziel-Baurate. In diesem Fall könnte dann so optimiert werden, dass eine gewünschte Geschwindigkeit in der Produktion erreicht wird. Die Ziel-Baurate hängt insbesondere mit der oben genannten Leistung des Energiestrahls und der Scan-Geschwindigkeit zusammen.

- Eine erlaubte Abweichung von der (zulässigen) Maximaltemperatur, insbesondere in der Schmelzzone.

- Eine Ziel-Schmelzbadform, also beispielsweise eine angestrebte Form, um Lücken in einer bereits verfestigten Hatch-Struktur zu füllen.

Ebenso kann es wie erwähnt eine Vielzahl von Neben- und/oder Randbedingungen geben, um die lokale Zieltemperaturverteilung zu definieren bzw. einzugrenzen. Vorzugsweise bezieht sich zumindest eine Neben- und/oder Randbedingung auf eine Einhaltung zumindest eines der folgenden Parameter oder Vorgaben:

- Maximaltemperatur. Im Allgemeinen ist dies, wie bereits erwähnt, die Verdampfungstemperatur des Materials bzw. einer Materialkomponente, d. h. die maximal zulässige Temperatur, damit man im Prozessfenster des Wärmeleitungsschweißens bleibt. Diese Maximaltemperatur ist ja durch das verwendete Material bzw. die Materialkomponenten vorgegeben und ohne Veränderung des Materials auch nicht veränderlich. Daher handelt es sich um eine Randbedingung.

- Mindesttemperatur. Hier wird im Allgemeinen die Schmelztemperatur des jeweils verwendeten Materials bzw. Liquidustemperatur der jeweilig verwendeten Legierung vorgegeben. Auch dieses ist bei vorgegebenem Material also eine Randbedingung.

- Ein stetiger Temperaturverlauf an einer Bereichsgrenze zwischen zwei benachbarten Prozesszonen. Vorzugsweise sollte der Temperaturverlauf zumindest einmal stetig differenzierbar sein. Besonders bevorzugt ist der Temperaturverlauf nahezu glatt, d. h. mindestens dreimal stetig differenzierbar. Ein stetiger Temperaturverlauf bedeutet letztlich, dass es an den Bereichsgrenzen bzw. Übergängen zwischen zwei benachbarten Prozesszonen keine Sprünge gibt, was ja auch irreal wäre. Diese Vorgabe kann innerhalb eines Optimierungsprozesses als Neben- oder auch Randbedingung vorgegeben werden. Das heißt, dass beispielsweise die Bedingung "zumindest einmal stetig differenzierbar" als Randbedingung fest vorgegeben ist und als Nebenbedingung gefordert wird, einen möglichst glatten Temperaturverlauf zu erreichen.

- Minimale Schmelzbadtiefe. Hierbei kann es sich um die angestrebte Schmelzbadtiefe bzw. Einschweißtiefe handeln, um eine Anbindung an die vorher verfestigte Schicht sicherzustellen. Auch dies kann als Neben- oder Randbedingung festgelegt werden, d. h. dass eine bestimmte Mindestschmelzbadtiefe, aber möglichst ein optimaler Wert, beispielsweise in bestimmten Bereichsgrenzen, erreicht wird.

Es können alle die genannten Parameter bzw. Vorgaben auch in Kombination in der Optimierung vorgegeben und eingehalten werden oder auch nur Teile davon. Insbesondere können verschiedene Parameter bzw. Parameterwerte je nach Strategie auch wahlweise als Optimierungskriterien bzw. Zielgrößen, Nebenbedingungen und/oder Randbedingungen festgelegt werden.

Eine weitere Randbedingung, die berücksichtigt werden kann bzw. vorzugsweise sollte, ist die Bedingung der Energieerhaltung im Prozess. Da grundsätzlich eingebrachte Energie abfließen muss, kann vorzugsweise entsprechend in einem Optimierungsprozess auch beachtet werden, dass nicht mehr Energie einbracht wird, als abfließen kann.

Ebenso könnte als eine Randbedingung auch die maximal mögliche örtliche (optische) Auflösung der Strahlformeinrichtung oder der Strahlerzeugungseinrichtung oder eine Schaltzeit bzw. Schaltfrequenz bei einem Umschalten zwischen bestimmten Strahleigenschaften bei der Formung des Intensitätsprofils berücksichtigt werden sowie eine Nebenbedingung, dass die Scan-Geschwindigkeit immer größer als Null sein sollte, damit ein Energiestrahl nicht an einer Stelle verharrt.

Je nach Materialien, gewähltem Energiestrahl und sonstigen Prozessbedingungen wie erlaubten Scan-Geschwindigkeiten, verwendetem Schutzgas, zu erreichenden Ziel-Bauraten und Oberflächengüten etc. kann das ermittelte optimierte Intensitätsprofil des Energiestrahls völlig unterschiedliche Formen aufweisen. Das heißt, es sind - unabhängig davon, wie und wo die nicht-rotationssymmetrische Intensitätsverteilung erreicht wird - beliebige Formen von nicht-rotationssymmetrischen Intensitätsverteilungen bzw. Intensitätsprofilen denkbar.

Erste Versuche haben gezeigt, dass insbesondere zunächst (also beispielsweise für eine erste Spur bzw. einen ersten Hatch) Intensitätsverteilungen optimal sein können, die auf dem Baufeld eine Achsensymmetrie aufweisen, deren Symmetrieachse entlang des Bewegungsvektors der Auftrefffläche auf dem Baufeld verläuft, also beispielsweise eine in Scanrichtung achsensymmetrische Intensitätsverteilung, bei der der Energiestrahl in einem von der Strahlachse aus nach vorne verschobenen Bereich eine höhere Intensität aufweist als in einem hinteren Bereich (wobei die Bezeichnungen "vorne" und "hinten" sich auf die aktuelle Bewegungsrichtung beziehen). Eine solche Form ließe sich beispielsweise durch eine Überlagerung zweier Gauß-Verteilungen erreichen, die gegeneinander verschoben sind, d. h. eine in Scanrichtung vorne liegende stärkere Gauß-Verteilung und eine größere Gauß-Verteilung, deren Mittelpunkt entgegen der Scanrichtung zur höheren Gauß-Verteilung verschoben ist. Bei einem besonders bevorzugten optimierten Intensitätsprofil weist dieses in einem Bereich der Auftrefffläche auf dem Baufeld einen Maximumbereich, d. h. einen Bereich höchster Intensität, auf. Wie erwähnt, befindet sich dieser Maximumbereich dann vorzugsweise in einer Bewegungsrichtung des Energiestrahls auf dem Baufeld, also in Scanrichtung, mehr nach vorne verschoben.

Werden Spuren benachbart zu bereits verfestigten Bereichen gefahren, kann dies berücksichtigt werden und dementsprechend kann eine Abweichung von einer achsensymmetrischen Intensitätsverteilung vorteilhaft sein.

Nicht nur das Intensitätsprofil, sondern auch eine Abmessung der Auftrefffläche des Energiestrahls auf dem Baufeld, d. h. die Strahlausdehnung des Energiestrahls auf dem Baufeld, kann zusammen mit dem Intensitätsprofil bestimmt bzw. optimiert werden. Besonders bevorzugt weist die Auftrefffläche des Energiestrahls auf dem Baufeld eine Strahlbreite (senkrecht zur Scanrichtung) von mindestens 400 $\mu$m auf, bevorzugt mindestens 600 $\mu$m, besonders bevorzugt mindestens 800 $\mu$m, z. B. ca. 1 mm.

Wie bereits eingangs erläutert, sollte der Wärmeleitungsschweißprozess in zumindest einem Bestrahlungsmodus genutzt werden, vorzugsweise im Core-Modus, in dem es darum geht, das Innere des Bauteils zu fertigen. Wie erläutert, wird in diesem Modus meist mit einer Hatch-Struktur gearbeitet.

Im Gegensatz dazu wird in einem Konturmodus meist mit einem Energiestrahl und ohne Hatch-Struktur gearbeitet, wobei der Energiestrahl die gesamte Kontur des zu fertigenden Bauteils in der jeweiligen Schichtebene in einem Durchgang abfährt. Eine ähnliche Vorgehensweise kann im Inneren des Bauteils, beispielsweise in Bereichen von Löchern, gewünscht sein. Unter Umständen ist bei solchen speziellen Bestrahlungsmodi ein Wärmeleitungsschweißprozess nicht gewünscht.

In einer bevorzugten Variante des Verfahrens wird daher im Fertigungsprozess in einem weiteren Bestrahlungsmodus, besonders bevorzugt in einem Konturmodus, wahlweise der Energiestrahl so erzeugt, dass ein Schmelzen des Aufbaumaterials innerhalb des Zielbereichs als Tiefschweißen bewirkt wird.

Um beispielsweise Ecken in einem Bauteilquerschnitt gut mit einem Energiestrahl abzufahren, kann ein relativ kleiner Strahldurchmesser vorteilhaft sein. Da jedoch mit einem kleinen Strahldurchmesser beim Arbeiten in einem Wärmeleitungsschweißprozess bei konstanter Schichtdicke nicht immer ausreichende Eindringtiefen erreicht werden können, kann ein Wechsel in einen anderen Modus, z. B. einen Tiefschweißprozess, vorteilhaft sein.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:

Figur 1 eine schematische, teilweise im Schnitt dargestellte Ansicht eines Ausführungsbeispiels einer Vorrichtung zur additiven Fertigung mit einer erfindungsgemäßen Steuerdatenerzeugungseinrichtung,

Figur 2 ein Flussdiagramm eines möglichen Verfahrensablaufs eines Ausführungsbeispiels eines erfindungsgemäßen Produktionsverfahrens,

Figuren 3 bis 7 schematische Darstellungen von Ausführungsbeispielen zur Unterteilung eines Zielbereichs und seiner Umgebung in verschiedene Prozesszonen,

Figur 8 ein Flussdiagramm eines möglichen Verfahrensablaufs eines Ausführungsbeispiels eines Optimierungsverfahrens innerhalb eines erfindungsgemäßen Produktionsverfahrens,

Figur 9 eine schematische Darstellung der funktionellen Anordnung von Komponenten eines Ausführungsbeispiels einer Strahlformungseinrichtung, um einem Eingangs-Energiestrahl ein gewünschtes Intensitätsprofil zu geben.

Die nachfolgenden Ausführungsbeispiele werden mit Bezug auf eine Vorrichtung 1 zur additiven Fertigung von Fertigungsprodukten in Form einer Lasersinter- oder Laserschmelzvorrichtung 1 beschrieben, wobei explizit noch einmal darauf hingewiesen ist, dass die Erfindung nicht auf Lasersinter- oder Laserschmelzvorrichtungen beschränkt ist. Die Vorrichtung wird im Folgenden - ohne eine Beschränkung der Allgemeinheit - daher kurz als "Lasersintervorrichtung" 1 bezeichnet.

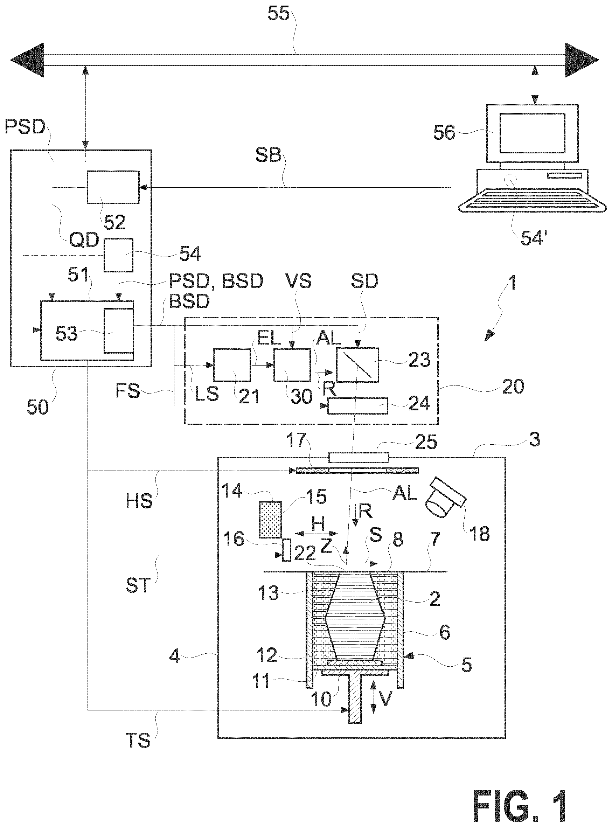

Eine solche Lasersintervorrichtung 1 ist schematisch in Figur 1 gezeigt. Die Vorrichtung weist eine Prozesskammer 3 bzw. einen Prozessraum 3 mit einer Kammerwandung 4 auf, in der im Wesentlichen der Fertigungsprozess abläuft. In der Prozesskammer 3 befindet sich ein nach oben offener Behälter 5 mit einer Behälterwandung 6. Die obere Öffnung des Behälters 5 bildet die jeweils aktuelle Arbeitsebene 7. Der innerhalb der Öffnung des Behälters 5 liegende Bereich dieser Arbeitsebene 7 kann zum Aufbau des Objekts 2 verwendet werden und wird daher als Baufeld 8 bezeichnet.

Der Behälter 5 weist eine in einer vertikalen Richtung V bewegliche Grundplatte 11 auf, die auf einem Träger 10 angeordnet ist. Diese Grundplatte 11 schließt den Behälter 5 nach unten ab und bildet damit dessen Boden. Die Grundplatte 11 kann integral mit dem Träger 10 gebildet sein, sie kann aber auch eine getrennt von dem Träger 10 gebildete Platte sein und an dem Träger 10 befestigt oder auf diesem einfach gelagert sein. Je nach Art des konkreten Aufbaumaterials, also beispielsweise des verwendeten Pulvers, und des Fertigungsprozesses kann auf der Grundplatte 11 eine Bauplattform 12 als Bauunterlage angebracht sein, auf der das Objekt 2 aufgebaut wird. Grundsätzlich kann das Objekt 2 aber auch auf der Grundplatte 11 selber aufgebaut werden, die dann die Bauunterlage bildet.

Der grundsätzliche Aufbau des Objekts 2 erfolgt, indem eine Schicht Aufbaumaterial 13 zunächst auf die Bauplattform 12 aufgebracht wird, dann - wie später erläutert - mit einem Laser AL an den Punkten, welche Teile des zu fertigenden Objekts 2 bilden sollen, das Aufbaumaterial 13 selektiv verfestigt wird, dann mit Hilfe des Trägers 10 die Grundplatte 11, somit die Bauplattform 12 abgesenkt wird und eine neue Schicht des Aufbaumaterials 13 aufgetragen und selektiv verfestigt wird usw. In Figur 1 ist das in dem Behälter auf der Bauplattform 12 aufgebaute Objekt 2 unterhalb der Arbeitsebene 7 in einem Zwischenzustand dargestellt. Es weist bereits mehrere verfestigte Schichten auf, umgeben von unverfestigt gebliebenem Aufbaumaterial 13. Als Aufbaumaterial 13 können verschiedene Materialien verwendet werden, vorzugsweise Pulver, insbesondere Metallpulver, Kunststoffpulver, Keramikpulver, Sand, gefüllte oder gemischte Pulver oder auch pastöse Materialien.

Frisches Aufbaumaterial 15 befindet sich in einem Vorratsbehälter 14 der Lasersintervorrichtung 1. Mit Hilfe eines in einer horizontalen Richtung H bewegbaren Beschichters 16 kann das Aufbaumaterial in der Arbeitsebene 7 bzw. innerhalb des Baufelds 8 in Form einer dünnen Schicht aufgebracht werden.

Optional befindet sich in der Prozesskammer 3 eine zusätzliche Strahlungsheizung 17. Diese kann zum Beheizen des aufgebrachten Aufbaumaterials 13 dienen, so dass die für die selektive Verfestigung genutzte Bestrahlungseinrichtung nicht zu viel Energie einbringen muss. Das heißt, es kann beispielsweise mit Hilfe der Strahlungsheizung 17 schon eine Menge an Grundenergie in das Aufbaumaterial 13 eingebracht werden, welche natürlich noch unterhalb der notwendigen Energie ist, bei der das Aufbaumaterial 13 verschmilzt oder sintert. Als Strahlungsheizung 17 kann beispielsweise ein Infrarotstrahler genutzt werden.

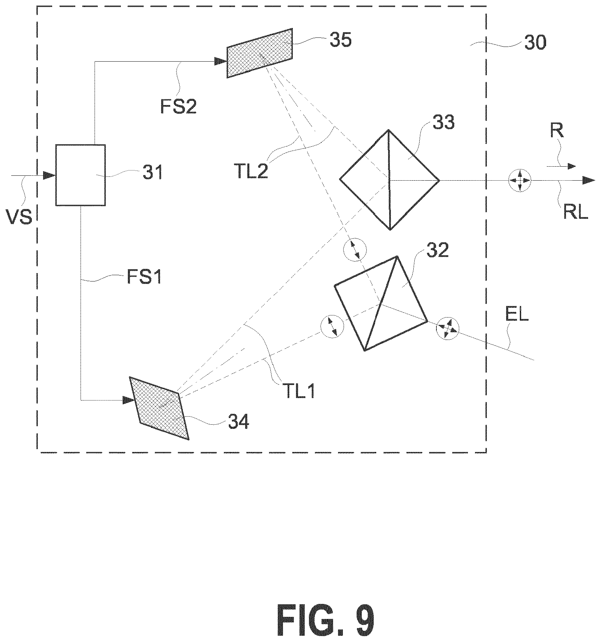

Zum selektiven Verfestigen weist die Lasersintervorrichtung 1 eine Bestrahlungsvorrichtung 20 bzw. konkret Belichtungsvorrichtung 20 mit einem Laser 21 auf. Dieser Laser 21 erzeugt einen Laserstrahl EL, der zunächst einer Strahlformungseinrichtung 30 (als Eingangs-Energiestrahl EL) zugeführt wird. Diese Strahlformungseinrichtung 30 ist, wie später noch anhand von Figur 9 genauer erläutert wird, so aufgebaut, dass sie aus dem Eingangs-Energiestrahl EL einen (Ausgangs-)Energiestrahl AL bzw. Ausgangs-Laserstrahl AL zur Bestrahlung des Aufbaumaterials 13 so erzeugt, so dass dieser eine bezüglich einer Rotation um die Strahlrichtung R des Energiestrahls AL im Wesentlichen nicht-rotationssymmetrische Intensitätsverteilung aufweist. Über eine nachfolgende Umlenkvorrichtung 23 (Scanner 23) wird der Energiestrahl AL dann umgelenkt, um so die gemäß der Belichtungsstrategie vorgesehenen Belichtungspfade oder Spuren in der jeweils selektiv zu verfestigenden Schicht abzufahren und selektiv die Energie einzubringen. D. h., mittels des Scanners 23 wird die Auftrefffläche 22 des Energiestrahls AL auf dem Baufeld 8 bewegt, wobei sich der aktuelle Bewegungsvektor bzw. die Bewegungsrichtung S (Scanrichtung) der Auftrefffläche 22 auf dem Baufeld 8 häufig und schnell ändern kann. Dabei wird dieser Laserstrahl AL durch eine Fokussiereinrichtung 24 auf die Arbeitsebene 7 in geeigneter Weise fokussiert. Die Bestrahlungsvorrichtung 20 befindet sich hier vorzugsweise außerhalb der Prozesskammer 3, und der Laserstrahl AL wird über ein an der Oberseite der Prozesskammer 3 in der Kammerwandung 4 angebrachtes Einkoppelfenster 25 in die Prozesskammer 3 geleitet.

Die Bestrahlungsvorrichtung 20 kann beispielsweise nicht nur einen, sondern mehrere Laser umfassen. Vorzugsweise kann es sich hierbei um Gas- oder Festkörperlaser oder jede andere Art von Laser wie z. B. Laserdioden handeln, insbesondere VCSEL (Vertical Cavity Surface Emitting Laser) oder VECSEL (Vertical External Cavity Surface Emitting Laser) oder eine Zeile dieser Laser. Ganz besonders bevorzugt können im Rahmen der Erfindung ein oder mehrere unpolarisierte Single-Mode-Laser, z. B. ein 3 kW Faserlaser mit einer Wellenlänge von 1070 nm, eingesetzt werden.

Die Lasersintervorrichtung 1 enthält weiterhin eine Sensoranordnung 18, welche dazu geeignet ist, eine während des Auftreffens des Laserstrahls 22 auf das Aufbaumaterial in der Arbeitsebene emittierte Prozessstrahlung zu erfassen. Diese Sensoranordnung 18 arbeitet dabei ortsaufgelöst, d. h. sie ist in der Lage, eine Art Emissionsbild der jeweiligen Schicht zu erfassen. Vorzugsweise wird als Sensoranordnung 18 ein Bildsensor bzw. eine Kamera 18 verwendet, welche im Bereich der emittierten Strahlung ausreichend sensitiv ist. Alternativ oder zusätzlich könnten auch ein oder mehrere Sensoren zur Erfassung einer optischen und/oder thermischen Prozessstrahlung genutzt werden, z. B. Photodioden, die die von einem Schmelzbad unter auftreffendem Laserstrahl AL emittierte elektromagnetische Strahlung erfassen, oder Temperaturfühler zum Erfassen einer emittierten thermischen Strahlung (sogenanntes Meltpool-Monitoring). Eine Zuordnung des Signals eines selbst nicht ortsauflösenden Sensors zu den Koordinaten wäre möglich, indem die Koordinaten, die für die Ansteuerung des Laserstrahls genutzt werden, dem Sensorsignal jeweils zeitlich zugeordnet werden. In Figur 1 ist die Sensoranordnung 18 innerhalb der Prozesskammer 3 angeordnet. Sie könnte sich aber auch außerhalb der Prozesskammer 3 befinden und die Prozessstrahlung dann durch ein weiteres Fenster in der Prozesskammer 3 erfassen.

Die von der Sensoranordnung 18 erfassten Signale werden als Prozessraum-Sensordatensatz bzw. Schichtbild SB hier an eine Steuereinrichtung 50 der Lasersintervorrichtung 1 übergeben, welche auch dazu dient, die verschiedenen Komponenten der Lasersintervorrichtung 1 zur gesamten Steuerung des additiven Fertigungsprozesses anzusteuern.

Hierzu weist die Steuereinrichtung 50 eine Steuereinheit 51 auf, welche über eine Bestrahlungssteuerschnittstelle 53 die Komponenten der Bestrahlungsvorrichtung 20 ansteuert, nämlich hier an den Laser 21 Lasersteuerdaten LS übersendet, an die Strahlformungseinrichtung 30 Intensitätsverteilungssteuerdaten VS, an die Umlenkvorrichtung 23 Scansteuerdaten SD und an die Fokussiervorrichtung 24 Fokussteuerdaten FS.

Die Steuereinheit 51 steuert auch mittels geeigneter Heizungssteuerdaten HS die Strahlungsheizung 17 an, mittels Beschichtungssteuerdaten ST den Beschichter 16 und mittels Trägersteuerdaten TS die Bewegung des Trägers 10 und steuert somit die Schichtdicke.

Zusätzlich weist die Steuereinrichtung 50 hier eine Qualitätsdaten-Ermittlungseinrichtung 52 auf, die den Prozessraum-Sensordatensatz SB erhält und darauf basierend Qualitätsdaten QD ermittelt, die beispielsweise an die Steuereinheit 51 übergeben werden können, um regelnd in den additiven Fertigungsprozess eingreifen zu können.

Die Steuereinrichtung 50 ist, hier z. B. über einen Bus 55 oder eine andere Datenverbindung, mit einem Terminal 56 mit einem Display oder dergleichen gekoppelt. Über dieses Terminal kann ein Bediener die Steuereinrichtung 50 und somit die gesamte Lasersintervorrichtung 1 steuern, z. B. durch Übermittlung von Prozesssteuerdaten PSD.

Um den Produktionsprozess zu optimieren, werden mittels einer Steuerdatenerzeugungsvorrichtung 54, 54' in der erfindungsgemäßen Weise die Steuerdaten so generiert bzw. so modifiziert, dass die Ansteuerung der Vorrichtung 1 in zumindest einem bestimmten Betrahlungsmodus (im Folgenden wird davon ausgegangen, dass es der Core-Modus ist, in welchem das Innere eines Objekts verfestigt werden soll) so erfolgt, dass zum einen der Prozess als Wärmeleitungsschweißprozess und nicht als Tiefschweißprozess durchgeführt wird und zum anderen der Energiestrahl AL an der Auftrefffläche 22 auf dem Baufeld ein optimiertes, im Wesentlichen nicht rotationssymmetrisches Intensitätsprofil aufweist.

Diese Steuerdatenerzeugungsvorrichtung 54 kann beispielsweise Teil der Steuereinrichtung 50 sein und dort beispielsweise in Form von Softwarekomponenten realisiert sein. Eine solche in die Steuereinrichtung 50 integrierte Steuerdatenerzeugungsvorrichtung 54 kann beispielsweise die Prozesssteuerdaten PSD übernehmen und entsprechend so modifizieren, dass ein Energiestrahl AL mit optimiertem Strahlprofil erzeugt wird und die entsprechend modifizierten Steuerdaten PSD dann an die Steuereinheit 51 weiter übermitteln. Die modifizierten Steuerdaten PSD umfassen dabei insbesondere modifizierte Belichtungssteuerdaten BSD, aber ggf. auch noch andere modifizierte Steuerdaten, wie beispielsweise geänderte Beschichtungssteuerdaten ST oder Trägersteuerdaten TS, um eine passende Schichtdicke zu wählen. Alternativ könnten in der Steuerdatenerzeugungsvorrichtung 54 aber auch nur die Belichtungssteuerdaten BSD modifiziert werden und an die Steuereinheit 51 übergeben werden, so dass die Bestrahlungssteuerschnittstelle 53 mit den modifizierten Belichtungssteuerdaten BSD arbeitet.

Ebenso wäre es aber auch möglich, dass die Steuerdatenerzeugungsvorrichtung 54' auf einer externen Rechnereinheit, beispielsweise hier dem Terminal 56, realisiert ist und vorab bereits Prozesssteuerdaten PSD mit entsprechend passenden Belichtungssteuerdaten BSD erstellt, mit denen die Vorrichtung 1 so angesteuert wird, dass das optimierte Intensitätsprofil erreicht wird, um den Prozess als Wärmeleitungsschweißprozess durchzuführen. In diesem Fall könnte auf die in der Steuereinrichtung 50 hier vorhandene interne Steuerdatenerzeugungsvorrichtung 54 auch verzichtet werden.

Wie bereits erwähnt können die durch die Steuerdatenerzeugungsvorrichtung 54, 54' erzeugten bzw. modifizierten Prozesssteuerdaten PSD, insbesondere Belichtungssteuerdaten BSD, auch als Sollwerte angesehen werden, die dann in der Steuereinheit 51 für einen Regelprozess verwendet werden, wobei z. B. (als eine Möglichkeit) die Qualitätsdaten QD als Ist-Werte mit eingehen können.

Es wird an dieser Stelle auch noch einmal darauf hingewiesen, dass die vorliegende Erfindung nicht auf eine solche Lasersintervorrichtung 1 beschränkt ist. Sie kann auf beliebige andere Verfahren zum generativen bzw. additiven Herstellen eines dreidimensionalen Objekts durch, insbesondere schichtweises, Aufbringen und selektives Verfestigen eines Aufbaumaterials angewendet werden, wobei ein Energiestrahl zum Verfestigen auf das zu verfestigende Aufbaumaterial abgegeben wird. Dementsprechend kann auch die Bestrahlungsvorrichtung nicht nur, wie hier beschrieben, ein Laser sein, sondern es könnte jede Einrichtung verwendet werden, mit der Energie als Wellen- oder Teilchenstrahlung selektiv auf bzw. in das Aufbaumaterial gebracht werden kann. Beispielsweise könnte anstelle eines Lasers eine andere Lichtquelle, ein Elektronenstrahl etc. verwendet werden.

Auch wenn in Figur 1 nur ein einzelnes Objekt 2 dargestellt wird, ist es möglich und in der Regel auch üblich, mehrere Objekte in der Prozesskammer 3 bzw. im Behälter 5 parallel herzustellen. Auch hierfür wird später noch ein Beispiel gegeben. Dazu wird das Aufbaumaterial schichtweise an Stellen, die den Querschnitten der Objekte in der jeweiligen Schicht entsprechen, durch den Energiestrahl abgetastet.

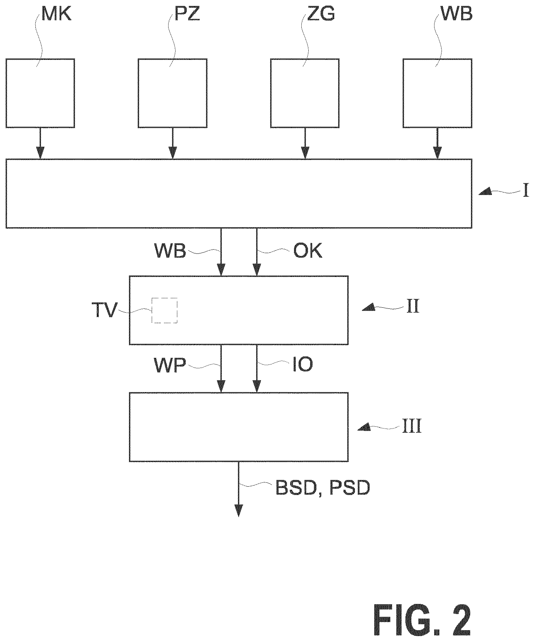

Die Vorgehensweise zur Erstellung eines optimierten Intensitätsprofils IO sowie weiterer optimierter Prozessparameter WP, wie beispielsweise der Scan-Geschwindigkeit, des Fokus, der Schichtdicke etc., wie sie beispielsweise von der Steuerdatenerzeugungsvorrichtung 54, 54' ermittelt werden könnten, wird im Folgenden anhand von Figur 2 erläutert.

In einem ersten Schritt I werden zunächst bestimmte Optimierungskriterien OK sowie Neben- und Randbedingungen WB festgelegt.

Als Eingangswerte können hier beispielsweise Materialkennwerte MK des Aufbaumaterials, wie beispielsweise die oben beschriebenen Kennwerte zur Beschreibung der Phasenumwandlung des Aufbaumaterials, Abkühlungsraten und Temperaturhaltepunkte, Wärmeleitkoeffizienten, Wärmekapazität, Dichte, thermische Leitfähigkeit, Oberflächenspannung, Phasenumwandlungsenthalpien, Siede- bzw. Verdampfungstemperaturen, Schmelztemperaturen etc., zur Verfügung gestellt werden. Diese können in Form von Funktionen und/oder Tabellen oder auch als Einzelwerte vorgegeben werden. Prinzipiell ist es auch möglich, dass beispielsweise Prozessdaten übernommen werden, welche Informationen wie Typ- oder Produktbezeichnungen der verwendeten Materialien etc. enthalten, und dementsprechend werden automatisch die passenden Materialkennwerte ausgewählt. Ebenso wäre es möglich, dass das Material und/oder die Materialkennwerte über eine Benutzerschnittstelle eingegeben werden.

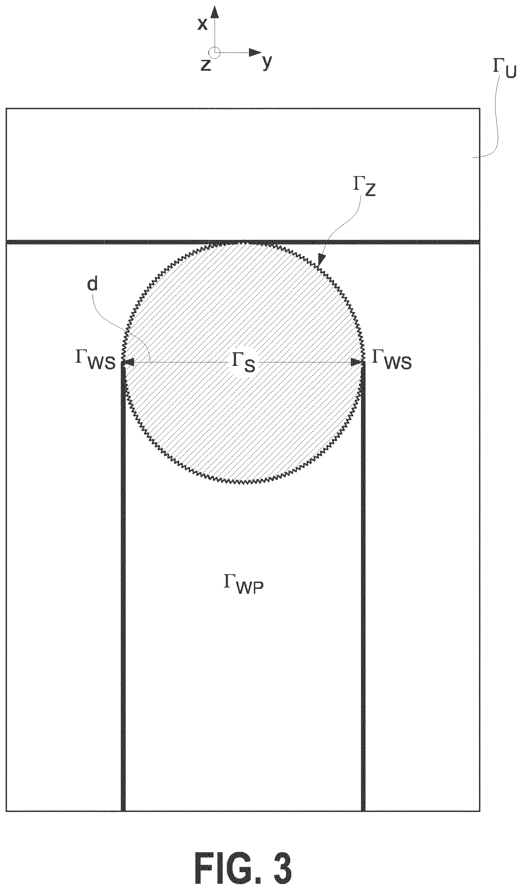

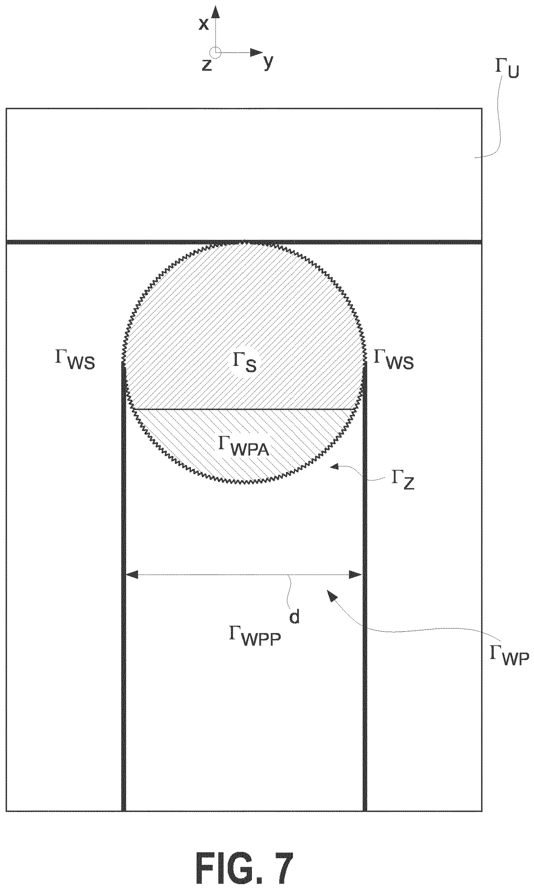

Außerdem können in diesem Schritt Prozesszonen PZ definiert werden, beispielsweise auch von Seiten eines Benutzers oder durch Entnahme aus bereits vordefinierten Steuerprotokollen etc. Mögliche Prozesszonen PZ werden später noch anhand der Figuren 3 bis 7 näher erläutert.

Weiterhin können Zielgrößen ZG vorgegeben werden, wie beispielsweise die Zielabkühlrate oder optimale Temperaturhaltepunkte, gewünschte lokale Ziel-Temperaturgradienten für unterschiedliche Prozesszonen, eine Ziel-Schmelzbadtiefe, eine Ziel-Oberflächengüte, eine Ziel-Baurate, Abweichen von der zulässigen Maximaltemperatur, die noch erlaubt wäre, und Ziel-Schmelzbadformen etc.

Schließlich können auch bestimmte Rand- und/oder Nebenbedingungen WB direkt vorgegeben werden, wenn dies gewünscht ist. Auch diese Daten können z. B. aus vorgefertigten bzw. existierenden Steuerprotokollen entnommen werden.

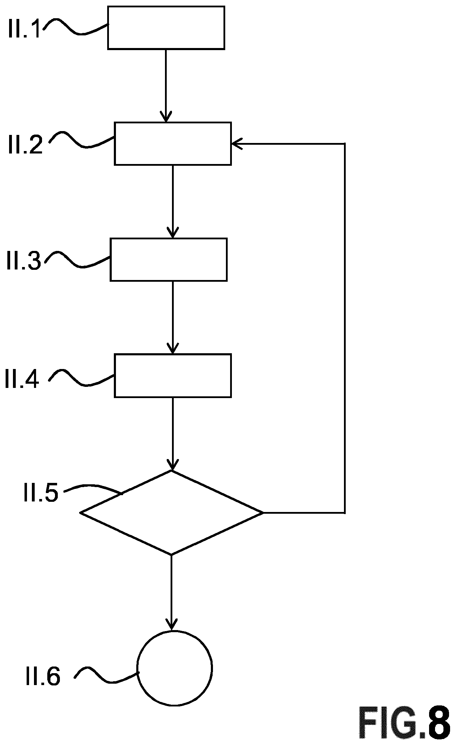

Die im Schritt I bestimmten Optimierungskriterien OK und Rand- und/oder Nebenbedingungen WB betreffend eine optimale lokale Temperaturverteilung TV (Ziel-Temperaturverteilung) gehen dann in einem weiteren Schritt II in einen Optimierungsprozess ein, in dem ein optimiertes Intensitätsprofil IO sowie weitere Prozessparameter WP ermittelt werden, bei deren Einhaltung die Ziel-Temperaturverteilung TV im jeweils aktuellen Zielbereich des Aufbaumaterials die Optimierungskriterien möglichst gut erreicht und ebenso möglichst gut die Nebenbedingungen und definitiv auch die Randbedingungen einhält. Die in diesem Optimierungsprozess ermittelten weiteren Prozessparameter WP können z. B. die Scan-Geschwindigkeit und die Schichtdicke umfassen, die in Kombination mit dem optimierten Intensitätsprofil IO ideal sind. Ein Beispiel für einen solchen Optimierungsprozess wird später noch anhand von Figur 8 erläutert.

Das optimierte Intensitätsprofil IO und die weiteren Prozessparameter WP werden dann im Schritt III genutzt, um die Steuerdaten PSD, BSD zu generieren, oder falls Teile dieser Steuerdaten schon vorhanden sind, diese entsprechend zu modifizieren, so dass ein Energiestrahl mit dem optimierten Intensitätsprofil IO jeweils an der Auftrefffläche 22 auf dem Baufeld 8 auftritt und die weiteren Prozessparameter WP bei der Bestrahlung bzw. beim Aufbau der Schicht eingehalten werden.

Im Folgenden wird lediglich beispielhaft eine mögliche Berechnung eines optimierten Intensitätsprofils IO beschrieben, welches in einem Laserschweißprozess dazu führen würde, dass der Schweißprozess nach dem Prinzip des Wärmeleitungsschweißens erfolgt. Es sei an dieser Stelle darauf hingewiesen, dass sich das gesamte Verfahren auch in ähnlicher Weise für andere Energiestrahlen durchführen lässt.

Hierzu wird zunächst eine ebene Fläche definiert, in der ein bewegtes orthogonales Koordinatensystem x, y, z existiert, dessen Ursprung immer im Zentrum des bewegten Laserstrahls AL liegt. Die z-Richtung dieses Koordinatensystems verläuft dabei senkrecht zur Arbeitsebene. Die x- und y-Koordinaten sind entsprechend senkrecht zur z-Richtung angeordnet. Das Koordinatensystem ist so definiert, dass es mit dem Laserstrahl AL rotiert, so dass sich der Laserstrahl immer in positive x-Richtung bewegt, d. h. die Projektion der Koordinate x auf das Baufeld 8 entspricht der Scanrichtung S.

Die in diesem Koordinatensystem definierte (x- / y -) Ebene wird in dem Bereich um die Auftrefffläche 22 des Energiestrahls AL auf dem Baufeld 8, d. h. in einem Zielbereich $\Gamma_Z$ sowie einer gewissen Umgebung $\Gamma_U$ um den Zielbereich $\Gamma_Z$ virtuell in räumlich unterschiedliche Prozesszonen unterteilt. Die Definition der Optimierungskriterien OK und/oder Neben- und/oder Randbedingungen WB erfolgt dann in Bezug zu diesen Prozesszonen.

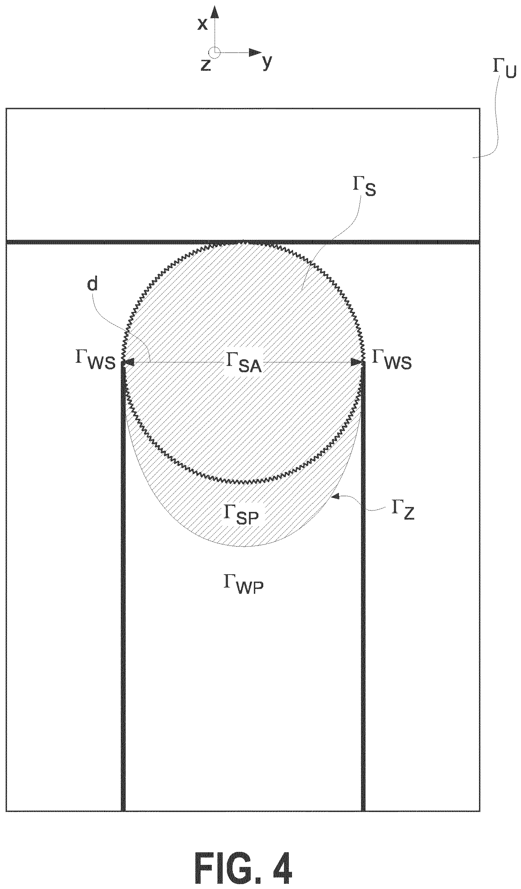

Ein erster Bereich bzw. eine erste Prozesszone $\Gamma_S$ könnte als Schmelzzone $\Gamma_S$ bezeichnet werden. Dies kann jener Bereich sein, in dem der Werkstoff bzw. das Aufbaumaterial im schmelzflüssigen Zustand vorliegt. Diese Schmelzzone $\Gamma_S$ kann bei Bedarf wiederum in eine aktive Schmelzzone $\Gamma_{SA}$ und eine passive Schmelzzone $\Gamma_{SP}$ (als unterschiedliche erste und zweite Prozesszonen) unterteilt werden (vgl. hierzu die Figuren 3 und 4). Der aktive Bereich wird jeweils durch den Laserstrahl AL geheizt, der passive Bereich nicht.

Weiterhin kann ein dritter Bereich bzw. eine dritte Prozesszone $\Gamma_{WS}$ definiert werden, welche die Wärmeeinflusszone $\Gamma_{WS}$ seitlich neben dem Laserstrahl bzw. senkrecht zur jeweiligen Bewegungsrichtung x umfasst. Ebenso kann eine vierte Wärmeeinflusszone, welche dem Laserstrahl direkt nachläuft, als nachlaufende Wärmeeinflusszone $\Gamma_{WP}$ definiert werden.

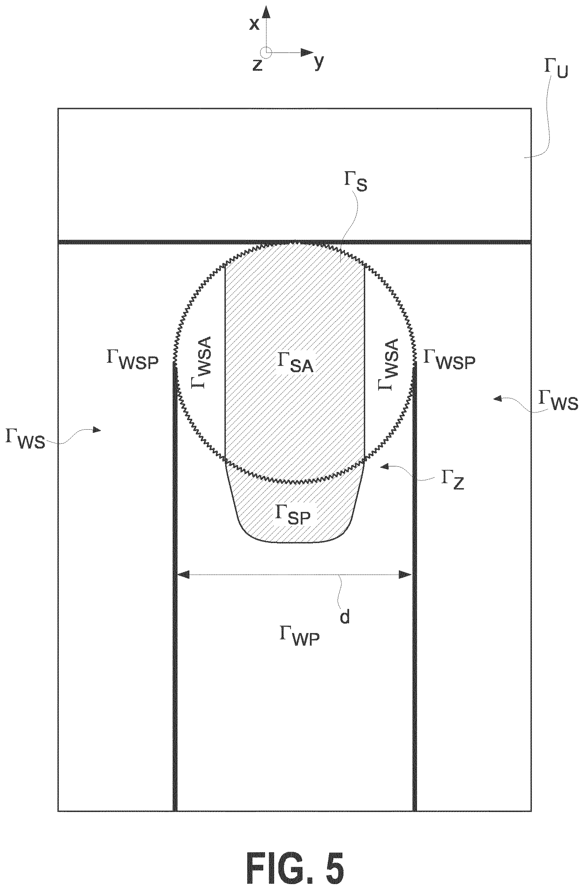

Anstelle nur einer seitlichen Wärmeeinflusszone $\Gamma_{WS}$ und/oder einer nachlaufenden Wärmeeinflusszone $\Gamma_{WP}$ können jeweils analog zur Schmelzzone auf Wunsch auch jeweils aktive Wärmeeinflusszonen $F_{WSA}$, $\Gamma_{WSP}$ und entsprechende passive Wärmeeinflusszonen $\Gamma_{WPA}$, $\Gamma_{WPP}$ definiert werden, wie dies in den Figuren 5 bis 7 beispielhaft gezeigt ist.

Der verbleibende Bereich, insbesondere z. B. der Bereich in Scanrichtung vor dem Laserstrahl AL, wird nur als Umgebung $\Gamma_U$ bezeichnet. Wie insbesondere aus den Figuren 5 bis 7 zu sehen ist, muss die Strahlausdehnung d des Laserstrahls AL nicht mit der aktiven Schmelzzone $\Gamma_{SA}$ übereinstimmen und kann beispielsweise größer sein, wenn man beispielsweise die Wärmeeinflusszonen auch aktiv beeinflussen möchte, also hier die Prozesszonen $\Gamma_{WSA}$ oder $\Gamma_{WPA}$. So lassen sich in diesen Gebieten beispielsweise die Abkühlrate und der Temperaturgradient genauer bestimmen. Der Laserstrahl AL sollte aber alle "aktiv beeinflussten" Bereiche abdecken.

Für eine Variante mit einer Aufteilung in Prozesszonen $\Gamma_{SA}$, $\Gamma_{SP}$, $\Gamma_{WS}$, $\Gamma_{WP}$, wie sie beispielhaft in Figur 4 dargestellt wird, wird im Folgenden etwas konkreter eine mögliche Optimierung erläutert. Für andere Aufteilungen würden entsprechend angepasste ähnliche Definitionen und Prozesse genutzt.

Zunächst können aus den Werkstoffdaten des vorhandenen Werkstückes folgende Größen für die Optimierung bestimmt bzw. vorgegeben werden:

- Die Abkühlrate T. Diese hängt ab vom Material, d. h. welche Materialeigenschaften gewünscht sind, z. B. die Korngröße, die martensitische Phasenumwandlung etc.

- Die maximal verträgliche Temperatur $T_v$. Dies ist in der Regel die Verdampfungstemperatur des verwendeten Werkstoffes bzw., wie schon erwähnt, bei einem Gemisch aus mehreren Materialien die niedrigste Verdampfungstemperatur.

- Die Schmelztemperatur $T_M$. Hier müsste bei einer Materialmischung ebenfalls die niedrigste Schmelztemperatur angegeben werden.

- Ein Ziel-Temperaturgradient in der Schmelzzone $\Gamma_S$, welcher beispielsweise wie folgt mathematisch definiert werden kann:

$$\nabla T_S(x,y) = \begin{pmatrix} \nabla T_{Sx}(x,y) \\ \nabla T_{Sy}(x,y) \end{pmatrix} \qquad (1)$$

$T_S(x, y)$ entspricht dabei der Temperatur im Zielbereich des Laserstrahls AL an der Stelle (x, y) auf dem Baufeld 8, $\nabla T_S(x,y)$ entspricht dabei der Ableitung der Temperatur im Zielbereich des Laserstrahls AL an der Stelle (x, y) auf dem Baufeld 8 und $\nabla T_{Sx}(x,y)$, $\nabla T_{Sy}(x,y)$ sind jeweils die Ableitungen in x- und y-Richtung.

- Ein Ziel-Temperaturgradient in der seitlichen Wärmeeinflusszone $\Gamma_S$, der mathematisch wie folgt definiert werden könnte:

$$\nabla T_{WS}(x,y) = \begin{pmatrix} \nabla T_{WSx}(x,y) \\ \nabla T_{WSy}(x,y) \end{pmatrix} \qquad (2)$$

$T_{WS}(x, y)$ entspricht dabei der Temperatur im Zielbereich des Laserstrahls AL an der Stelle (x, y) auf dem Baufeld 8, $\nabla T_{WS}(x,y)$ entspricht dabei der Ableitung Temperatur im Zielbereich des Laserstrahls AL an der Stelle (x, y) auf dem Baufeld 8 und $\nabla T_{WSx}(x,y)$, $\nabla T_{WSy}(x,y)$ sind jeweils die Ableitungen in x- und y-Richtung.

Analog zum diesem Ziel-Temperaturgradient der seitlichen Wärmeeinflusszone $\Gamma_{WS}$, könnte auch ein Ziel-Temperaturgradient für die nachlaufende Wärmeeinflusszone $\Gamma_{WP}$ definiert werden.

Bei den oben definierten Temperaturgradienten handelt es sich jeweils um vorgegebene Wunschparameter. Beispielsweise könnte ein maximaler Temperaturgradient in Abhängigkeit vom Material gegeben werden, da der jeweilige Temperaturgradient die thermokapillare Konvektion bestimmt.

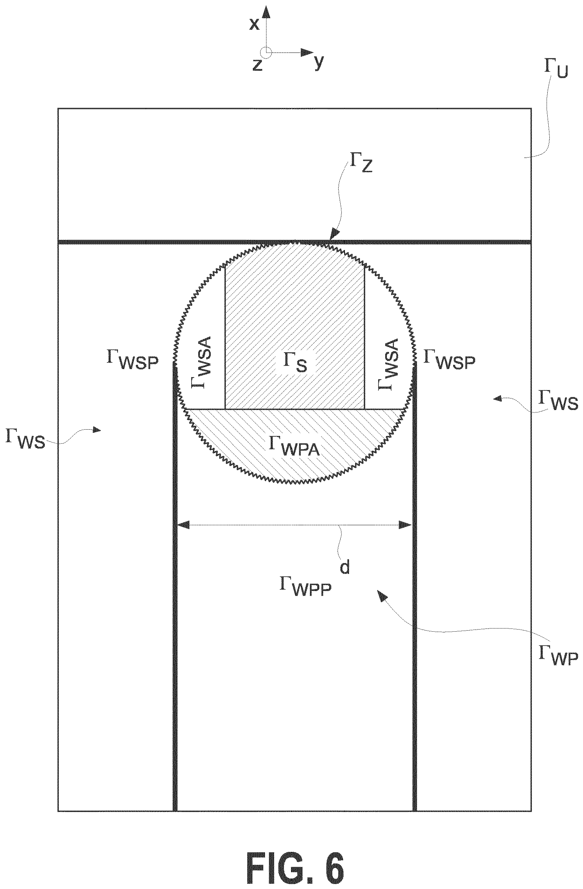

Insbesondere können bei der Festlegung der Ziel-Temperaturgradienten auch folgende Aspekte berücksichtigt werden: Grundsätzlich entstehen durch die Temperaturgradienten zwischen dem Festkörper und der Schweißnaht nach deren Erstarrung und Abkühlung Spannungen. Diese Spannungen können so groß werden, dass sie die Qualität des Bauteils signifikant verschlechtern und im Extremfall sogar zu Rissen führen können. Eine Einflussnahme auf Größe und Verteilung dieser Spannungen zur ausreichenden Reduktion derselben, z. B. durch Anpassung von Belichtungs- und Strahlparametern, kann also die Bauteilqualität erhöhen. Dabei kann es eine Zielrichtung sein, die Temperaturgradienten zu verringern bzw. ausreichend klein zu halten. Da die Temperatur an der Grenzfläche Schmelze/Festkörper für einen gegebenen Werkstoff feststeht, kann dies erreicht werden, indem die Temperatur des Festkörpers zumindest lokal, also an der Stelle, an der die Schweißnaht anbinden soll (die Anbindungszone), vorab oder parallel geeignet erhöht wird. Dies könnte auch durch eine Modifikation des Intensitätsprofils erreicht werden, indem dieses so gestaltet wird, dass die Anbindungszone ebenfalls bestrahlt werden würde, und zwar gerade mit einer Energiemenge, die dort die gewünschte Temperaturverteilung erzeugen würde. Beispielsweise können hierzu die aktiven Wärmeeinflusszonen $\Gamma_{WSA}$, wie sie in den Figuren 5 und 6 dargestellt sind, genutzt werden, indem diese Prozesszonen speziell definiert werden.

Nachfolgend werden als Beispiele für die Variante zur Definition der Prozesszonen nach Figur 4 einige mathematische Gleichungen vorgestellt, mit denen Optimierungsziele bzw. Optimierungskriterien und Nebenbedingungen sowie Randbedingungen definiert werden können. Die Gleichungen (3) bis (6) zeigen dabei mögliche Optimierungsziele bzw. Nebenbedingungen an und die Gleichungen (7) bis (13) Nebenbedingungen bzw. Randbedingungen, welche erfüllt werden sollten:
Beispielsweise kann für alle Punkte x, y innerhalb der Schmelzzone $\Gamma_S$ folgendes Optimierungsziel definiert werden:

$$\min\left( w_1(x,y)\left(T_V - T(I,x,y)\right) + w_2(x,y)\sqrt{\left(\frac{\partial T(x,y)}{\partial x} - \nabla T_{Sx}(x,y)\right)^2 + \left(\frac{\partial T(x,y)}{\partial y} - \nabla T_{Sy}(x,y)\right)^2} \right) \qquad (3)$$

Gleichung (3) beschreibt also die Optimierung der Ziel-Temperaturverteilung $T(I, x,y)$ in der Schmelzzone $\Gamma_S$. Der Parameter I in der Bezeichnung $T(I, x,y)$ symbolisiert dabei die Abhängigkeit der Ziel-Temperaturverteilung $T(I, x,y)$ von der eigentlich zu optimierenden Intensitätsverteilung $I(x,y)$ des Energiestrahls. Der Zusammenhang zwischen $T(I, x,y)$ und $I(x,y)$ kann z. B. über eine Kopplungsbedingung der beiden Größen definiert werden, wie sie später noch in Gleichung (10) gegeben wird. Grundsätzlich ließen sich die Gleichung (3) oder die anderen Optimierungsziele auch direkt in einer Abhängigkeit von der Intensitätsverteilung $I(x,y)$ anstelle der Ziel-Temperaturverteilung $T(I, x,y)$ umschreiben, was aber dazu führen würde, dass die Formeln sehr komplex werden. Je nach gewähltem Optimierungsverfahren kann der Zusammenhang auch in einem Simulationsschritt (welcher simulieren kann, welche Intensitätsverteilung $I(x,y)$ mit welchen weiteren Parametern zu welcher Ziel-Temperaturverteilung $T(I, x,y)$ führen würde) in einem iterativ arbeitenden Optimierungsprozess berücksichtigt werden. Insofern wird im Folgenden nicht immer der Parameter I in der Ziel-Temperaturverteilung $T(x,y)$ mit genannt, auch wenn die Abhängigkeit zwischen der Ziel-Temperaturverteilung $T(x,y)$ und der Intensitätsverteilung $I(x,y)$ immer gegeben ist.

Im ersten Term der Gleichung (3) ist die Differenz zwischen Verdampfungstemperatur $T_v$ und der zu optimie-

renden lokalen Temperatur T(x,y) an der Schmelzbadoberfläche die zu minimierende Zielfunktion. Dies sorgt dafür, dass die Temperatur T(x,y) in der Schmelzzone $\Gamma_S$ möglichst nah an der Verdampfungstemperatur $T_v$ ist. Allerdings sollte noch durch eine nicht in der Gleichung (3) beschriebene Randbedingung sichergestellt werden, dass die Temperatur T(x,y) an der Schmelzbadoberfläche überall unterhalb der Verdampfungstemperatur $T_v$ bleibt, damit auch das Prozessfenster des Wärmeleitungsschweißens eingehalten wird (siehe später Gleichung (7)).

Der zweite Teil in der Gleichung (3) definiert die räumlichen Schwankungen der Temperatur T(x,y) an der Schmelzbadoberfläche als Zielfunktion. Hierbei soll der Fehler zu einer gewünschten räumlichen Schwankung minimiert werden, d. h. es wird ein Wunschtemperaturgradient $\nabla T_{S(x,y)}$ gemäß Gleichung (1) vorgegeben, der eingehalten werden soll. Wenn es zum Beispiel das Ziel wäre, jegliche thermokapillare Konvektion in der Schmelzbadoberfläche zu unterdrücken, so könnten die Komponenten des Temperaturgradienten $\nabla T_{S(x,y)}$ zu Null gesetzt werden. Soll dagegen eine gewünschte Strömung im Schmelzbad und damit ein massenbehafteter Wärmetransport induziert werden, so kann der zur Indizierung dieser Strömung notwendige Temperaturgradient $\nabla T_{S(x,y)}$ an jedem Punkt x, y in der Schmelzzone über die Temperaturabhängigkeit der Oberflächenspannung bestimmt werden. Dies kann beispielsweise mit Hilfe von numerischen Berechnungen zur Lösung der Navier-Stokes-Gleichungen erfolgen. In einem dabei genutzten mathematischen Modell kann dann die thermokapillare Konvektion berücksichtigt werden. Außerdem kann in einem solchen Modell auch der Wärmetransport modelliert werden. Solche Modelle können zum Beispiel in dem oben genannten Simulationsschritt in einem iterativ arbeitenden Optimierungsprozess genutzt werden.

Mittels der Gewichtungsfaktoren $w_1$, $w_2$ in Gleichung (3) kann - z. B. in Abhängigkeit von der Sensitivität des Materials bezüglich des Temperaturgradienten - vorgegeben werden, ob mehr Wert auf die Nähe der aktuellen Temperatur an der Verdampfungstemperatur liegt, also die Schmelze möglichst heiß ist, oder die Temperaturgradienten stärker zu berücksichtigen sind.

Die Optimierung der Temperaturverteilung in der seitlichen Wärmeeinflusszone $\Gamma_{WS}$ kann durch folgende Gleichung definiert werden:

$$\min\left(\sqrt{\left(\frac{\partial T(x,y)}{\partial x} - \nabla T_{WSx}(x,y)\right)^2 + \left(\frac{\partial T(x,y)}{\partial y} - \nabla T_{WSy}(x,y)\right)^2}\right) \qquad (4)$$

Auch in dieser Wärmeeinflusszone $\Gamma_{WS}$ kann über den Temperaturgradienten $\nabla T_{WS(x,y)}$ ein gewünschtes Temperaturprofil vorgegeben werden. Dieses gewünschte Profil kann dann so gewählt werden, dass Eigenspannungen, welche sich infolge zu starker lokaler Temperaturgradienten ausbilden können, reduziert werden. Aus den zulässigen Temperaturgradienten zur Reduktion der Eigenspannungen werden die Komponenten für den Temperaturgradienten $\nabla T_{WS(x,y)}$ an jedem Punkt x,y und der seitlichen Wärmeeinflusszone $\Gamma_{WS}$ bestimmt.

Ein Optimierungskriterium für die Temperaturverteilung T(x,y) für Orte x, y in der nachlaufenden Wärmeeinflusszone $\Gamma_{WP}$ kann beispielsweise durch folgende Gleichung definiert werden:

$$\min\left(\frac{\partial T(x,y)}{\partial x} v - \dot{T}\right) \qquad (5)$$

Hierbei wird die Abkühlungsgeschwindigkeit T über das Produkt aus räumlichem Temperaturgradienten $\frac{\partial T(x,y)}{\partial x}$ in Bewegungsrichtung und Scan-Geschwindigkeit v ausgedrückt. Wird ein Punkt angenommen, der zu einem bestimmten Zeitpunkt im Zentrum des Lasers lag, so kühlt sich dieser Punkt für einen externen, nicht mitbewegten Beobachter mit einer Abkühlungsgeschwindigkeit T ab. Diese darf sich nicht von der Abkühlungsgeschwindigkeit aus Sicht eines mitbewegten Beobachters unterscheiden, welche durch den räumlichen bzw. örtlichen Gradienten $\frac{\partial T(x,y)}{\partial x}$, multipliziert mit der Scan-Geschwindigkeit v, ausgedrückt werden kann.

Außerdem kann die Scan-Geschwindigkeit v ein Optimierungskriterium sein, da sich dadurch die Zeit, in welcher ein Werkstück erstellt wird, festlegen lässt, ebenso wie die für den Prozess benötigte Leistung, welche sich aus dem Integral der Ziel-Intensitätsverteilung (bzw. der optimierten Intensitätsverteilung) I(x,y) des Laserstrahls ergibt. Wenn z. B. die minimal notwendige Leistung ein Optimierungsparameter wird, kann das System energieeffizienter gestaltet werden.

Hierzu kann für alle Prozesszonen bzw. Bereiche festgelegt werden, dass die Intensitätsverteilung I(x,y) des Laserstrahls folgende Bedingung erfüllen muss:

$$\min(w_3 \int \int I(x,y)dydx - w_4 v) \tag{6}$$

Dabei läuft das äußere Integral über alle x- und das innere Integral über alle y-Koordinatenwerte, d. h. es handelt sich bei dem Doppelintegral um die Leistung des Energiestrahls. Mit anderen Worten ist das Integral der Intensität I(x,y), also die Leistung des Energiestrahls, zu minimieren und die Scan-Geschwindigkeit v zu maximieren, um eine möglichst hohe Baurate bei geringstem Energieverbrauch anzustreben. Da sich die beiden Bedingungen widersprechen, wird mit Hilfe der Optimierungsbedingung (6) ein Pareto-Optimum gefunden, wobei je nach Bedarf mittels der Gewichtungsfaktoren $w_3$, $w_4$ die Gewichtung mehr auf das eine oder das andere Ziel gelegt werden kann. Beispielsweise kann es günstiger sein, einen Laser mit mehr Leistung zu betreiben, damit eine möglichst hohe Geschwindigkeit und damit kürzere Bauzeit erreicht werden kann. Eine ganzheitliche Betrachtung ist sinnvoll.

Es wird in diesem Zusammenhang darauf hingewiesen, dass diese Gleichung aber nur eine sehr stark vereinfachte Version ist. Hier können beispielsweise sinnvollerweise noch weitere Faktoren mitberücksichtigt werden, z.B. Faktoren, welche die Kosten des Betriebs der Maschine beschreiben etc.

Des Weiteren können für das Optimierungsverfahren folgende Nebenbedingungen definiert werden:

$$T_V - T(x,y) \geq 0 \tag{7}$$

Dies ist die oben bereits genannte Nebenbedingung, dass die aktuelle örtliche Temperatur T(x,y) niemals höher sein sollte als die niedrigste Verdampfungstemperatur $T_V$, um in einem Wärmeleitungsschweißprozess zu bleiben.

$$T(x,y) - T_M \geq 0 \tag{8}$$

Hierdurch wird in ähnlicher Weise definiert, dass die Temperatur T(x,y) immer größer oder gleich der Schmelztemperatur $T_M$ sein sollte.

Für die Orte x,y in der Schmelzzone $\Gamma_S$ und der seitlichen Wärmeeinflusszone $\Gamma_{WS}$ kann (exemplarisch für einen Schnitt in y-Richtung) zudem definiert werden:

$$\lim_{y \in \Gamma_S} T(y) - \lim_{y \in \Gamma_{WS}} T(y) > 0 \tag{9}$$

Durch diese Nebenbedingung wird sichergestellt, dass an den Grenzen der beiden Prozesszonen, hier also zwischen der Schmelzzone $\Gamma_S$ und der Wärmeeinflusszone $\Gamma_{WS}$, die Temperaturen möglichst identisch sein sollten, da es ja keinen Temperatursprung in der Oberfläche gibt. Analog können Randbedingungen für andere Prozesszonenübergänge definiert werden.

Eine weitere Nebenbedingung kann sicherstellen, dass alle Energie, die in den Prozess hineingeht, auch nach unten abfließt:

$$\alpha I(x,y) - \lambda\big(T(x,y,z)\big)\frac{\partial T(x,y,z)}{\partial z} = 0 \tag{10}$$

Dies wird durch den Term

$$\lambda\big(T(x,y,z)\big)\frac{\partial T(x,y,z)}{\partial z} \tag{11}$$

sichergestellt, der den Abfluss von Energie in das Gebiet $\Omega$ unterhalb der Oberfläche definiert, $\alpha$ ist dabei die Absorptionsfähigkeit des Aufbaumaterials und $\lambda$ ist dessen Wärmeleitfähigkeit.

Die Bedingung (10) sollte für alle Orte x,y in den aktiven Zonen gelten, d. h. in der Schmelzzone $\Gamma_S$ und gegebenenfalls auch in den "aktiven" Wärmeeinflusszonen $\Gamma_{WSA}$, $\Gamma_{WPA}$, sofern diese festgelegt wurden (z. B. bei einer Definition der Prozesszonen wie in Figur 6).

Die benötigten Größen für die Gleichungen (10) und (11) können z. B. durch ein Lösen der Wärmeleitgleichung

$$c_{p,eff}\big(T(x,y,z)\big)\rho\big(T(x,y,z)\big)\dot{T}(x,y,z) = \nabla \cdot (\lambda\big(T(x,y,z)\big) \cdot \nabla T(x,y,z)) \tag{12}$$

für alle Orte x,y,z im Volumen Ω bestimmt werden, wobei T(x,y, z) die zeitliche Ableitung von T(x,y,z) ist. $c_{p,eff}(T(x,y,z))$ ist hierbei die temperaturabhängige effektive Wärmekapazität, welche auch die Umwandlungswärme aller Phasenumwandlungen berücksichtigen kann, $\rho(T(x,y,z))$ bezeichnet die temperaturabhängige Dichte, und die temperaturabhängige Wärmeleitfähigkeit ist durch $\lambda(T(x,y,z))$ gegeben. VT(x,y, z) entspricht dabei der Ableitung der Temperatur T(x,y,z).

Schließlich kann vorzugsweise auch eine minimale Einschweißtiefe $t_{min}$ vorgegeben werden, welche erreicht werden muss, um eine Anbindung einer Schicht an eine vorgehende Schicht zu erreichen. Dies kann durch die Gleichung

$$t_{min} - t_{ist} < 0 \qquad\qquad (13)$$

definiert werden, wobei $t_{ist}$ die aktuelle Einschweißtiefe ist. Eine weitere Nebenbedingung kann sein, dass die Scan-Geschwindigkeit v immer größer 0 ist.

Entsprechend können Optimierungskriterien und Nebenbedingungen sowie Randbedingungen für andere Aufteilungen in Prozesszonen definiert werden. Welche der o. g. Bedingungen als Optimierungskriterien, als Nebenbedingungen oder Randbedingungen eingehen bzw. ob noch weitere hinzugenommen werden, hängt jeweils von der konkreten Fertigungsaufgabe (z. B. von der genutzten Maschine, dem Aufbaumaterial, dem Fertigungsprodukt und dessen Anforderungen etc.) ab. In der Regel müssen insbesondere die oben genannten Randbedingungen entsprechend der jeweiligen Maschine bzw. Vorrichtung zur additiven Herstellung der Produkte gewählt werden, in welcher der Prozess dann auch durchgeführt wird.

Auch eine Lösung der Gleichung 12 kann durch eine numerische oder empirische Analyse erfolgen. Auch kann im Rahmen einer adaptiven Steuerung oder Regelung die Gleichung mit einer in-situ-Messung (z. B. mittels Monitoring) abgeglichen werden und das Profil kann während des Prozesses durch das erneute Lösen des Optimierungsproblems wieder angepasst werden.

Ein bevorzugtes Beispiel für ein geeignetes Optimierungsverfahren wird im Folgenden anhand von Figur 8 erläutert. Dieses iterative Verfahren könnte zum Beispiel im Rahmen des Schritts II des Verfahrens gemäß Figur 2 durchgeführt werden.

In einem ersten Schritt II.1 werden zunächst Startwerte für eine (Start-)Intensitätsverteilung I(x,y) geschätzt.

In einem weiteren Schritt II.2 wird dann die Wärmeleitgleichung (12) gelöst, wobei die Nebenbedingungen gemäß der Gleichung (10) zu erfüllen ist. Hierbei enthält Gleichung (10) den Term αI(x, y), also die (Start-)Intensitätsverteilung I(x,y) aus Schritt II.1. Die Wärmeleitgleichung (12) beschreibt die Ableitung der bei der gegebenen Intensitätsverteilung I(x,y) durch den Laser in das Material eingebrachten thermischen Energie von der Auftreffffläche in das umgebende Material. Durch Lösung der Gleichung erhält man somit das bei der betreffenden Intensitätsverteilung I(x,y) des Lasers im Material auf dem Baufeld auftretende Temperaturprofil T(x,y,z). Im ersten Durchlauf der Iteration wird so quasi aus der Start-Intensitätsverteilung I(x,y) des Lasers ein Start-Temperaturprofil T(x,y,z) im Material berechnet.

Dann erfolgt in einem Schritt II.3 ein (erster) Optimierungsdurchgang des Temperaturprofils T(x,y,z), wobei "Korrekturwerte" für das Temperaturprofil T(x,y,z) gesucht werden, mit denen das Temperaturprofil T(x,y,z) u.a. die gemäß den Gleichungen (3) bis (9) oben definierten Optimierungskriterien und Bedingungen möglichst gut erfüllt.

Im Schritt II.4 wird dann geprüft, ob die Schritte II.2 und II.3 mindestens zweimal durchlaufen wurden und es wird dann ein Abbruchkriterium geprüft, wobei es sich z. B. um ein Konvergenzkriterium handeln kann, ob sich im aktuellen Durchlauf der Iteration das Temperaturprofil T(x,y,z) und/oder die Intensitätsverteilung I(x,y) gegenüber dem vorhergegangenen Durchlauf (wobei mit "aktuell" ein Durchlauf n beschrieben ist und mit "vorhergegangen" ein Durchlauf n-1) um einen vorab definierten Toleranzwert (Residuum) geändert haben. Ist dies nicht der Fall oder wurden die Schritte II.2 und II.3 erst einmal durchlaufen, so erfolgt ein Rücksprung zum Schritt II.2 und die Iterationsschleife wird ein weiteres Mal mit der aktuellen Intensitätsverteilung I(x,y) erneut durchlaufen.

Andernfalls ist das Optimierungsverfahren im Schritt II.5 beendet und die gesuchte optimale Intensitätsverteilung I(x,y) liegt vor.

Bei der zuvor beschriebenen Vorgehensweise können, wie erwähnt, als feste Parameter insbesondere die Dichte, die effektive Wärmekapazität, die Wärmeleitfähigkeit, die maximal verträgliche Temperatur, die Schmelztemperatur, der Temperaturgradient in der Wärmeeinflusszone und die Abkühlrate vorgegeben werden. Weiterhin geht als ein Prozessparameter hier die minimale Einschweißtiefe ein, welche durch die vorgegebene Schichthöhe des Prozesses festgelegt wird. Bei der Optimierung kann hier insbesondere die vom System benötigte Leistung minimiert werden und das pro Zeit umgeschmolzene Volumen maximiert werden. Die freien Größen sind dabei die Intensitätsverteilung und die Scan-Geschwindigkeit. Je nach Wunsch können aber auch beliebige andere Kriterien und Eingangswerte hinzugezogen werden, dies hängt jeweils von der verwendeten Maschine, dem verwendeten Material und den sonstigen Bedingungen und Anforderungen ab. Theoretisch kann beispielsweise auch im Rahmen der Optimierung die Legierungszusammensetzung innerhalb der jeweiligen Werkstoffspezifikation als zu optimierender Parameter berücksichtigt werden, da diese die Werkstoffkennwerte und die Kosten beeinflusst, um nur ein Beispiel zu nennen.

Mit dem oben beschriebenen Ansatz kann eine zumindest signifikante Reduktion der Verdampfung oder sogar eine vollständige Eliminierung der Verdampfung erreicht werden. Es kann dadurch die in den Werkstoff pro Laserstrahl eingekoppelte Leistung um etwa eine Größenordnung erhöht werden, ohne Einbußen bei der Detailauflösung hinzunehmen. Dabei wird eine vergleichbare Bauteilqualität erreicht, obwohl die Bauteilkosten erheblich reduziert werden können. Ein weiterer Vorteil ist, dass dieses Verfahren auch bei bereits schon bekannten Systemen mit nur einem oder wenigen Belichtungseinrichtungen bzw. Scannern/Laserstrahlen genutzt werden kann.

Insbesondere nicht nur zur Ausrüstung neuer Maschinen bzw. Vorrichtungen zur additiven Fertigung von Fertigungsprodukten, sondern auch zur Nachrüstung bereits vorhandener Maschinen bzw. Vorrichtungen, welche eine Belichtungsvorrichtung herkömmlicher Art aufweisen, die einen im Wesentlichen rotationssymmetrischen gaußförmigen Energiestrahl erzeugt, könnte eine nachfolgend anhand von Figur 9 beschriebene Strahlformungseinrichtung 30 verwendet werden.

Das in Figur 9 gezeigte Ausführungsbeispiel für eine geeignete Strahlformungseinrichtung 30 übernimmt einen Eingangs-Energiestrahl EL, beispielsweise einen Laserstrahl des oben in Zusammenhang mit Figur 1 erwähnten Lasers 21. Dieser Eingangs-Energiestrahl EL weist eine im Wesentlichen rotationssymmetrische Intensitätsverteilung auf, beispielsweise ein Gauß-Profil. In der Strahlformungseinrichtung 30 wird dann die Intensitätsverteilung dieses Eingangs-Energiestrahls EL so modifiziert, dass sie nach Verlassen der Strahlformungseinrichtung 30 bezüglich einer Rotation um die Strahlachse R bzw. Strahlrichtung im Wesentlichen nicht-rotationssymmetrisch ist. Beispielsweise kann hierbei eine elliptische Intensitätsverteilung erzielt werden, welche an einer Seite eine höhere Intensität aufweist als an einer anderen Seite. Bevorzugt kann die Intensitätsverteilung des Energiestrahls AL eine Achsensymmetrie aufweisen, deren Symmetrieachse entlang des Bewegungsvektors der Auftrefffläche 22 des Energiestrahls AL auf dem Baufeld 8 verläuft. Ein entsprechendes Beispiel für eine elliptische Intensitätsverteilung ist auch in der eingangs genannten Schrift von Tien T. Roehling et al. gezeigt. Es ist aber auch jede andere im Wesentlichen nicht-rotationssymmetrische Intensitätsverteilung mit dieser Strahlformungseinrichtung 30 erreichbar.

Die Strahlformungseinrichtung 30 weist eingangsseitig zunächst einen Strahlteiler 32 in Form eines Dünnschicht-Polarisators 32 auf, welcher den Eingangs-Energiestrahl EL in zwei linear polarisierte Teilstrahlen TL1, TL2 aufteilt. Jeder dieser linear polarisierten Teilstrahlen TL1, TL2 wird zu einem eigenen Strahlformungselement 34, 35 geleitet, wobei es sich jeweils um LCoS-Micro-Displays 34, 35 handelt. Diese LCoS-Micro-Displays 34, 35 sind für die eigentliche Strahlformung zuständig. Es handelt sich hierbei um passive DOEs, die reflektiv arbeiten und die Wellenfront des einfallenden Teilstrahls TL1, TL2 durch lokale Modulation von Phase und/oder Amplitude verändern. Hierzu werden die LCoS-Micro-Displays 34, 35 mit entsprechenden Teil-Formsteuersignalen FS1, FS2 angesteuert, welche über eine Steuerschnittstelle 31 an die beiden LCoS-Micro-Displays 34, 35 übergeben werden. Diese Steuerschnittstelle 31 empfängt eingangsseitig z. B. die Intensitätsverteilungssteuerdaten VS von der Bestrahlungssteuerschnittstelle 53 der Steuereinrichtung 50, wie sie im Zusammenhang mit Figur 1 beschrieben wurde.

Die beiden entsprechend modulierten Teilstrahlen TL1, TL 2 werden dann in einem Strahlkombinator 33 rekombiniert, wobei es sich auch hier - wie bei dem Strahlteiler 32 - um einen Dünnschicht-Polarisator 33 handelt. Am Ausgang des Strahlkombinators 33 liegt dann ein in der gewünschten Weise bezüglich der Intensitätsverteilung geformter Ausgangs-Laserstrahl AL vor, welcher wieder zufällig polarisiert ist.

Die an den beiden LCoS-Micro-Displays 34, 35 eingestellten Intensitätsprofile der Teilstrahlen bzw. Phasenprofile sind bevorzugt gleich. Zur Erreichung bestimmter optischer Nebenkriterien, beispielsweise einer maximalen Intensität auf optischen Elementen der Strahlformeinrichtung, können sie aber auch unterschiedlich so eingestellt werden, dass sich in der Zielebene trotzdem das gewünschte Intensitätsprofil einstellt.

Der von der Strahlformungseinrichtung 30 in dieser Weise modifizierte, d. h. mit dem nicht rotationssymmetrischen optimierten Intensitätsprofil IO versehene Laserstrahl AL wird dann, wie in Figur 1 schematisch gezeigt, an den Scanner 23 und von dort auf das Baufeld 8 weitergeleitet.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Z. B. könnte bei einer Nutzung von weiteren Wärmequellen zusätzlich zum Energiestrahl, beispielsweise einer Flächenheizung, und/oder anderer thermischer Einflussgrößen, wie einer Kühlung etc., die dadurch eingebrachte oder entzogene Energie bei der Optimierung berücksichtigt werden. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass diese aus mehreren zusammenwirkenden Teil-Komponenten besteht, die gegebenenfalls auch räumlich verteilt sein können.

Bezugszeichenliste

    1 Vorrichtung zur additiven Fertigung / Lasersintervorrichtung
    2 Fertigungsprodukt / Objekt / Bauteil

3 Prozessraum / Prozesskammer

4 Kammerwandung

5 Behälter

6 Behälterwandung

7 Arbeitsebene

8 Baufeld

10 Träger

11 Grundplatte

12 Bauplattform

13 Aufbaumaterial (im Behälter 5)

14 Vorratsbehälter

15 Aufbaumaterial (im Vorratsbehälter 14)

16 Beschichter

17 Strahlungsheizung

18 Sensoranordnung / Kamera

20 Bestrahlungsvorrichtung / Belichtungsvorrichtung

21 Laser

22 Auftrefffläche (des Laserstrahls)

23 Umlenkvorrichtung / Scanner

24 Fokussiereinrichtung

25 Einkoppelfenster

30 Strahlformungseinrichtung

31 Steuerschnittstelle

32 Strahlteiler / Dünnschicht-Polarisator

33 Strahlkombinator / Dünnschicht-Polarisator

34 Strahlformungselement / LCoS-Micro-Display

35 Strahlformungselement / LCoS-Micro-Display

50 Steuereinrichtung

51 Steuereinheit

52 Qualitätsdaten-Ermittlungseinrichtung

53 Bestrahlungssteuerschnittstelle

54, 54' Steuerdatenerzeugungsvorrichtung

55 Bus

56 Terminal

AL (Ausgangs-)Energiestrahl / Laserstrahl

BSD Steuerdaten / Belichtungssteuerdaten

EL Eingangs-Energiestrahl / Laserstrahl

FS Fokussteuerdaten

FS1, FS2 Teil-Formsteuersignale

H horizontale Richtung

HS Heizungssteuerdaten

LS Lasersteuerdaten

PSD Prozesssteuerdaten

QD Qualitätsdaten

R Strahlachse / Strahlrichtung

S Scanrichtung / Bewegungsrichtung der Auftrefffläche

SB Prozessraum-Sensordatensatz / Schichtbild

SD Scansteuerdaten

ST Beschichtungssteuerdaten

TL1, TL2 Teilstrahlen

TS Trägersteuerdaten

V vertikale Richtung

VS Intensitätsverteilungssteuerdaten

MK Materialkennwerte

PZ Prozesszonen

ZG Zielgrößen

OK Optimierungskriterien

WB Rand- und/oder Nebenbedingungen

TV lokale Temperaturverteilung / Ziel-Temperaturverteilung
IO optimiertes Intensitätsprofil
WP weitere Prozessparameter
x, y, z Koordinatenachsen
$\Gamma_U$ Umgebung
$\Gamma_Z$ Zielbereich
d Strahlausdehnung
$\Gamma_S$ Schmelzzone / Prozesszone
$\Gamma_{SA}$ aktive Schmelzzone / Prozesszone
$\Gamma_{SP}$ passive Schmelzzone / Prozesszone
$\Gamma_{WS}$ seitliche Wärmeeinflusszone / Prozesszone
$\Gamma_{WP}$ nachlaufende Wärmeeinflusszone
$\Gamma_{WSA}$, $\Gamma_{WSP}$ aktive Wärmeeinflusszonen
$\Gamma_{WPA}$, $\Gamma_{WPP}$ passive Wärmeeinflusszonen

## Patentansprüche

1. Verfahren zur Generierung von Steuerdaten (BSD, PSD) für eine Vorrichtung (1) zur additiven Fertigung eines Fertigungsprodukts (2) in einem Fertigungsprozess, in welchem Aufbaumaterial (13) aufgebaut und selektiv verfestigt wird, wobei zum Verfestigen auf einem Baufeld (8) eine Bestrahlung des Aufbaumaterials (13) mit zumindest einem Energiestrahl (AL) erfolgt, wobei eine Auftrefffläche (22) des Energiestrahls (AL) auf dem Baufeld (8) bewegt wird, um das Aufbaumaterial (13) in einem Zielbereich ($\Gamma_Z$) in und um die Auftrefffläche (22) aufzuschmelzen,

   wobei zur Generierung der Steuerdaten (BSD, PSD) für zumindest einen Bestrahlungsmodus Optimierungskriterien (OK) und/oder Neben- und/oder Randbedingungen (WB) betreffend eine lokale Zieltemperaturverteilung (TV) in dem Zielbereich ($\Gamma_Z$) des Aufbaumaterials (13) festgelegt werden, bei welcher ein Aufschmelzen des Aufbaumaterials (13) innerhalb des Zielbereichs ($\Gamma_Z$) als Wärmeleitungsschweißen bewirkt wird und auf Basis der Optimierungskriterien (OK) und/oder Neben- und/oder Randbedingungen (WB) im Rahmen eines Optimierungsprozesses zumindest ein optimiertes Intensitätsprofil (IO) des Energiestrahls (AL) ermittelt wird, wobei das optimierte Intensitätsprofil (IO) des Energiestrahls (AL) an der Auftrefffläche (22) auf dem Baufeld (8) bezogen auf eine koaxial zur Einfallsrichtung des Energiestrahls (AL) verlaufenden Strahlachse (R) im Wesentlichen nicht rotationssymmetrisch ist
   und wobei die Steuerdaten (BSD, PSD) so generiert werden, dass bei einer Ansteuerung der Vorrichtung (1) zur additiven Fertigung in dem Bestrahlungsmodus die Bestrahlung des Aufbaumaterials (13) mit einem Energiestrahl (AL) mit im Wesentlichen dem ermittelten optimierten Intensitätsprofil (IO) erfolgt.

2. Verfahren nach Anspruch 1, wobei auf Basis der Optimierungskriterien (OK) und/oder Neben- und/oder Randbedingungen (WB) zusätzlich zumindest einer der folgenden Prozessparameter (WP) bestimmt wird:

   - Strahlungsintensität;
   - zumindest eine Strahlausdehnung (d) und/oder Form an der Auftrefffläche (22) des Energiestrahls (AL) auf dem Baufeld (8);
   - Bewegungsgeschwindigkeit der Auftrefffläche (22) des Energiestrahls (AL) auf dem Baufeld (8);
   - Schichtdicke;
   - Bestrahlungsstrategie.

3. Verfahren nach Anspruch 1 oder 2, wobei der Zielbereich ($\Gamma_Z$) sowie optional eine Umgebung ($\Gamma_U$) um den Zielbereich ($\Gamma_Z$) in Prozesszonen (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$) aufgeteilt wird, wobei die räumliche relative Anordnung der Prozesszonen (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$) zueinander bezüglich eines in Bezug auf den Energiestrahl (AL) feststehenden Koordinatensystems (x, y, z) definiert ist, und wobei verschiedenen Prozesszonen (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$) unterschiedliche Optimierungskriterien (OK) und/oder Neben- und/oder Randbedingungen (WB) zugeordnet werden.

4. Verfahren nach einem der vorhergehenden Ansprüche, wobei bei der Festlegung der Optimierungskriterien (OK) und/oder Neben- und/oder Randbedingungen (WB) betreffend eine lokale Zieltemperaturverteilung (TV) zumindest ein Materialkennwert (MK) des Aufbaumaterials (13) berücksichtigt wird, vorzugsweise zumindest einer der folgenden Parameter:

- Kennwerte zur Beschreibung der Phasenumwandlungen des Aufbaumaterials;
- Abkühlungsraten und Temperaturhaltepunkte;
- räumliche Temperaturgradienten;
- Wärmeleitkoeffizient;
- Wärmekapazität;
- Dichte;
- thermische Leitfähigkeit;
- Oberflächenspannung;
- Phasenumwandlungsenthalpien;
- Siede- bzw. Verdampfungstemperatur;
- Schmelztemperatur.

5. Verfahren nach einem der vorhergehenden Ansprüche, wobei sich zumindest ein Optimierungskriterium (OK) auf zumindest einen der folgenden Parameter bezieht:

- lokale Temperatur;
- lokaler Temperaturgradient;
- Abkühlgeschwindigkeit;
- Leistung des Energiestrahls;
- Bewegungsgeschwindigkeit der Auftrefffläche des Energiestrahls auf dem Baufeld.

6. Verfahren nach einem der vorhergehenden Ansprüche, wobei zur Festlegung der Optimierungskriterien (OK) und/oder Neben- und/oder Randbedingungen (WB) betreffend eine lokale Zieltemperaturverteilung (TV) zumindest eine der folgenden Zielgrößen (ZG) bestimmt wird:

- zeitliche Temperaturentwicklung;
- lokaler Ziel-Temperaturgradient;
- Ziel-Schmelzbadtiefe;
- Ziel-Oberflächengüte;
- Ziel-Baurate;
- Abweichung von der Maximaltemperatur;
- Ziel-Schmelzbadform.

7. Verfahren nach einem der vorhergehenden Ansprüche, wobei zumindest eine Neben- und/oder Randbedingungen (WB) sich auf eine Einhaltung zumindest eines der folgenden Parameter oder Vorgaben bezieht:

- Maximaltemperatur;
- Mindesttemperatur;
- stetiger Temperaturverlauf an einer Bereichsgrenze zwischen zwei benachbarten Prozesszonen;
- minimale Schmelzbadtiefe.

8. Verfahren nach einem der vorhergehenden Ansprüche, wobei das Intensitätsprofil in einem Bereich der Auftrefffläche (22) auf dem Baufeld (8) einen Maximum-Bereich aufweist, vorzugsweise einen in einer Bewegungsrichtung (s) des Energiestrahls (AL) auf dem Baufeld (8) von der Strahlachse (R) aus nach vorne verschobenen Maximum-Bereich aufweist.

9. Verfahren nach einem der vorhergehenden Ansprüche, wobei die Auftrefffläche (22) des Energiestrahls (AL) auf dem Baufeld (8) eine Strahlbreite (b) von mindestens 400 $\mu$m, bevorzugt mindestens 600 $\mu$m, besonders bevorzugt mindestens 800 $\mu$m aufweist.

10. Verfahren nach einem der vorhergehenden Ansprüche, wobei in einem weiteren Bestrahlungsmodus der Energiestrahl (AL) so erzeugt wird, dass ein Schmelzen des Aufbaumaterials (13) innerhalb des Zielbereichs ($\Gamma_Z$) als Tiefschweißen bewirkt wird.

11. Verfahren zur Steuerung einer Vorrichtung (1) zur additiven Fertigung eines Fertigungsprodukts (2), wobei Steuerdaten (BSD, PSD) für die Vorrichtung (1) gemäß einem Verfahren nach einem der Ansprüche 1 bis 10 generiert werden und die Steuerung der Vorrichtung (1) unter Nutzung dieser Steuerdaten (BSD, PSD) erfolgt.

12. Steuerdatenerzeugungsvorrichtung (54, 54') zur Generierung von Steuerdaten (BSD, PSD) für eine Vorrichtung (1) zur additiven Fertigung eines Fertigungsprodukts (2) in einem Fertigungsprozess, in welchem Aufbaumaterial (13) aufgebaut und selektiv verfestigt wird, wobei zum Verfestigen auf einem Baufeld (8) eine Bestrahlung des Aufbaumaterials (13) mit zumindest einem Energiestrahl (AL) erfolgt, wobei eine Auftrefffläche (22) des Energiestrahls (AL) auf dem Baufeld (8) bewegt wird, um das Aufbaumaterial (13) in einem Zielbereich ($\Gamma_Z$) in und um die Auftrefffläche (22) aufzuschmelzen,

wobei die Steuerdatenerzeugungsvorrichtung (54, 54') so ausgebildet ist,
dass zur Generierung der Steuerdaten (BSD, PSD) für zumindest einen Bestrahlungsmodus Optimierungskriterien (OK) und/oder Neben- und/oder Randbedingungen (WB) betreffend eine lokale Zieltemperaturverteilung (TV) des Aufbaumaterials (13) in dem Zielbereich ($\Gamma_Z$) festgelegt werden, bei welcher ein Aufschmelzen des Aufbaumaterials (13) innerhalb des Zielbereichs ($\Gamma_Z$) als Wärmeleitungsschweißen bewirkt wird, und auf Basis der Optimierungskriterien (OK) und/oder Neben- und/oder Randbedingungen (WB) im Rahmen eines Optimierungsprozesses zumindest ein optimiertes Intensitätsprofil (IO) des Energiestrahls (AL) ermittelt wird, wobei das optimierte Intensitätsprofil (IO) des Energiestrahls (AL) an der Auftrefffläche (22) auf dem Baufeld (8) bezogen auf eine koaxial zur Einfallsrichtung des Energiestrahls (AL) verlaufenden Strahlachse (R) im Wesentlichen nicht rotationssymmetrisch ist,
und dass die Steuerdaten (BSD, PSD) so generiert werden, dass bei einer Ansteuerung der Vorrichtung (1) zur additiven Fertigung in dem Bestrahlungsmodus die Bestrahlung des Aufbaumaterials (13) mit einem Energiestrahl (AL) mit im Wesentlichen dem ermittelten Intensitätsprofil erfolgt.

13. Steuereinrichtung (50) für eine Vorrichtung (1) zur additiven Fertigung eines Fertigungsprodukts (2) in einem Fertigungsprozess, in welchem Aufbaumaterial (13) aufgebaut und selektiv verfestigt wird, wobei zum Verfestigen auf einem Baufeld (8) eine Bestrahlung des Aufbaumaterials (13) mit zumindest einem Energiestrahl (AL) erfolgt, wobei eine Auftrefffläche (22) des Energiestrahls (AL) auf dem Baufeld (8) bewegt wird, um das Aufbaumaterial (13) in einem Zielbereich in und um die Auftrefffläche (22) aufzuschmelzen,

wobei die Steuereinrichtung (20)
eine Steuerdatenerzeugungsvorrichtung (54) nach Anspruch 12 oder eine Schnittstelle zu einer Steuerdatenerzeugungsvorrichtung (54') nach Anspruch 12 zur Bereitstellung von Steuerdaten (BSD, PSD) aufweist und ausgebildet ist, um die Vorrichtung (1) zur Bestrahlung des Aufbaumaterials (13) mit dem Energiestrahl (AL) unter Nutzung dieser Steuerdaten (BSD, PSD) anzusteuern.

14. Vorrichtung (1) zur additiven Fertigung von Fertigungsprodukten (2) in einem additiven Fertigungsprozess mit zumindest einer Zuführvorrichtung (16) zum Einbringen von Aufbaumaterial (13) in einen Prozessraum (3), einer Bestrahlungsvorrichtung (20) zum selektiven Verfestigen des Aufbaumaterials (13) durch Bestrahlung mittels eines Energiestrahls (AL) sowie einer Steuereinrichtung (50) nach Anspruch 13.

15. Computerprogrammprodukt mit einem Computerprogramm, welches direkt in eine Speichereinrichtung einer Rechnereinheit, insbesondere Steuereinrichtung (50) einer Vorrichtung (1) zur additiven Fertigung von Fertigungsprodukten (2), ladbar ist, mit Programmabschnitten, um alle Schritte des Verfahrens nach einem der Ansprüche 1 bis 10 auszuführen, wenn das Computerprogramm in der Rechnereinheit, insbesondere Steuereinrichtung (50), ausgeführt wird.

16. Steuerdaten (BSD, PSD) zur Steuerung einer Vorrichtung (1) zur additiven Fertigung, welche Steuerdaten (BSD, PSD) so ausgebildet sind, dass sie die Vorrichtung (1) zur additiven Fertigung derart ansteuern, dass eine Fertigung eines Fertigungsprodukts (2) unter Nutzung eines Verfahrens nach Anspruch 11 erfolgt, und/oder wobei die Steuerdaten (BSD, PSD) mit einem Verfahren nach einem der Ansprüche 1 bis 10 erstellt wurden.

## Claims

1. A method for generating control data (BSD, PSD) for a device (1) for additive manufacturing of a manufactured product (2) in a manufacturing process in which build-up material (13) is built up and selectively solidified, wherein, for solidifying on a build field (8), irradiating of the build-up material (13) with at least one energy beam (AL) takes place, wherein an impingement surface (22) of the energy beam (AL) on the build field (8) is moved in order to melt the build-up material (13) in a target area ($\Gamma_Z$) in and around the impingement surface (22),

wherein for generating the control data (BSD, PSD) for at least one irradiation mode, optimization criteria (OK) and/or secondary and/or boundary conditions (WB) relating to a local target temperature distribution (TV) in the target area ($\Gamma_Z$) of the build-up material (13) are defined, at which temperature distribution a melting of the build-up material (13) within the target area ($\Gamma_Z$) is effected as heat conduction welding and on the basis of the optimization criteria (OK) and/or secondary and/or boundary conditions (WB) within the scope of an optimization process, at least one optimized intensity profile (IO) of the energy beam (AL) is determined, wherein the optimized intensity profile (IO) of the energy beam (AL) at the impingement surface (22) on the build field (8) is substantially non-rotationally symmetric with respect to a beam axis (R) running coaxially to the direction of incidence of the energy beam (AL),

and wherein the control data (BSD, PSD) are generated such that upon activating the device (1) for additive manufacturing in the irradiation mode, the irradiation of the build-up material (13) with an energy beam (AL) having substantially the determined optimized intensity profile (IO) occurs.

2. The method according to claim 1, wherein, on the basis of the optimization criteria (OK) and/or secondary and/or boundary conditions (WB), at least one of the following process parameters (WP) is additionally determined:

- radiation intensity;
- at least one beam expansion (d) and/or shape at the impingement surface (22) of the energy beam (AL) on the build field (8);
- movement speed of the impingement surface (22) of the energy beam (AL) on the build field (8);
- layer thickness;
- irradiation strategy.

3. The method according to claim 1 or 2, wherein the target area ($\Gamma_Z$) and optionally an environment ($\Gamma_U$) around the target area ($\Gamma_Z$) is divided into process zones (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$), wherein the spatial relative arrangement of the process zones (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$) to one another is defined with respect to a coordinate system (x, y, z) which is fixed with respect to the energy beam (AL), and wherein different process zones (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$) are assigned different optimization criteria (OK) and/or secondary and/or boundary conditions (WB).

4. The method according to any one of the preceding claims, wherein, when defining the optimization criteria (OK) and/or secondary and/or boundary conditions (WB) regarding a local target temperature distribution (TV), at least one material characteristic value (MK) of the build-up material (13), preferably at least one of the following parameters, is taken into account:

- characteristic values for describing the phase transformations of the build-up material;
- cooling rates and temperature holding points;
- spatial temperature gradients;
- thermal conduction coefficient;
- heat capacity;
- density;
- thermal conductivity;
- surface tension;
- phase transformation enthalpies;
- boiling or evaporation temperature;
- melting temperature.

5. The method according to any one of the preceding claims, wherein at least one optimization criterion (OK) relates to at least one of the following parameters:

- local temperature;
- local temperature gradient;
- cooling rate;
- power of the energy beam;
- movement speed of the impingement surface of the energy beam on the build field.

6. The method according to any one of the preceding claims, wherein for defining the optimization criteria (OK) and/or secondary and/or boundary conditions (WB) relating to a local target temperature distribution (TV) at least one of the following target variables (ZG) is determined:

- temporal temperature development;
- local target temperature gradient;
- target molten pool depth;
- target surface quality;
- target build rate;
- deviation from the maximum temperature;
- target molten pool shape.

7. The method according to any one of the preceding claims, wherein at least one secondary and/or boundary condition (WB) relates to the fulfillment of at least one of the following parameters or specifications:

- maximum temperature;
- minimum temperature;
- continuous temperature profile at a boundary between two adjacent process zones;
- minimum melt pool depth.

8. The method according to any one of the preceding claims, wherein the intensity profile in an area of the impingement surface (22) on the build field (8) has a maximum range, preferably a maximum range shifted forward from the beam axis (R) in a direction of movement (s) of the energy beam (AL) on the build field (8).

9. The method according to any one of the preceding claims, wherein the impingement surface (22) of the energy beam (AL) on the build field (8) has a beam width (b) of at least 400 $\mu$m, preferably at least 600 $\mu$m, particularly preferably at least 800 $\mu$m.

10. The method according to any one of the preceding claims, wherein in a further irradiation mode, the energy beam (AL) is generated such that melting of the build-up material (13) within the target area ($\Gamma_Z$) is effected as deep penetration welding.

11. A method for controlling a device (1) for additive manufacturing of a manufactured product (2), wherein control data (BSD, PSD) for the device (1) are generated according to a method according to any one of claims 1 to 10 and controlling of the device (1) occurs using these control data (BSD, PSD).

12. A control data generating device (54, 54') for generating control data (BSD, PSD) for a device (1) for additive manufacturing of a manufactured product (2) in a manufacturing process in which build-up material (13) is built up and selectively solidified, wherein, for solidifying on a build field (8), irradiating the build-up material (13) with at least one energy beam (AL) takes place, wherein an impingement surface (22) of the energy beam (AL) on the build field (8) is moved in order to melt the build-up material (13) in a target area ($\Gamma_Z$) in and around the impingement surface (22),

wherein the control data generating device (54, 54') is designed such
that for generating the control data (BSD, PSD) for at least one irradiation mode, optimization criteria (OK) and/or secondary and/or boundary conditions (WB) relating to a local target temperature distribution (TV) in the target area ($\Gamma_Z$) of the build-up material (13) are defined, at which temperature distribution a melting of the build-up material (13) within the target area ($\Gamma_Z$) is effected as heat conduction welding, and on the basis of the optimization criteria (OK) and/or secondary and/or boundary conditions (WB) within the scope of an optimization process, at least one optimized intensity profile (IO) of the energy beam (AL) is determined, wherein the optimized intensity profile (IO) of the energy beam (AL) at the impingement surface (22) on the build field (8) is substantially non-rotationally symmetric with respect to a beam axis (R) running coaxially to the direction of incidence of the energy beam (AL),
and that the control data (BSD, PSD) are generated such that upon activating the device (1) for additive manufacturing in the irradiation mode, the irradiation of the build-up material (13) with an energy beam (AL) having substantially the determined intensity profile occurs.

13. A control device (50) for a device (1) for additive manufacturing of a manufactured product (2) in a manufacturing process in which build-up material (13) is built up and selectively solidified, wherein, for solidifying on a build field (8), irradiating the build-up material (13) with at least one energy beam (AL) occurs, wherein an impingement surface (22) of the energy beam (AL) on the build field (8) is moved in order to melt the build-up material (13) in a target area in and around the impingement surface (22),

wherein the control device (20)
comprises a control data generating device (54) according to claim 12 or an interface to a control data generating device (54') according to claim 12 for providing control data (BSD, PSD)
and is designed to control the device (1) for irradiating the build-up material (13) with the energy beam (AL) using these control data (BSD, PSD).

14. A device (1) for additive manufacturing of manufactured products (2) in an additive manufacturing process, having at least one feed device (16) for introducing build-up material (13) into a process space (3), one irradiation device (20) for selectively solidifying the build-up material (13) by irradiating by means of an energy beam (AL), and one control device (50) according to claim 13.

15. A computer program product with a computer program which can be loaded directly into a storage device of a computer unit, in particular a control device (50) of a device (1) for additive manufacturing of manufactured products (2), with program sections for executing all steps of the process according to any one of claims 1 to 10 when the computer program is executed in the computer unit, in particular the control device (50).

16. Control data (BSD, PSD) for controlling a device (1) for additive manufacturing, which control data (BSD, PSD) are configured such that they control the device (1) for additive manufacturing in such a manner that manufacturing of a manufactured product (2) occurs using a method according to claim 11, and/or wherein the control data (BSD, PSD) were created using a method according to any one of claims 1 to 10.

**Revendications**

1. Procédé de génération de données de commande (BSD, PSD) pour un dispositif (1) de fabrication additive d'un produit de fabrication (2) dans un procédé de fabrication, dans lequel un matériau de construction (13) est constitué et consolidé de manière sélective, dans lequel, pour la solidification sur une zone de construction (8), on effectue une irradiation du matériau de construction (13) avec au moins un faisceau d'énergie (AL), une surface d'impact (22) du faisceau d'énergie (AL) étant déplacée sur la zone de construction (8) pour faire fondre le matériau de construction (13) dans une zone cible ($\Gamma_Z$) dans et autour de la surface d'impact (22),

dans lequel, pour la génération des données de commande (BSD, PSD) pour au moins un mode d'irradiation, des critères d'optimisation (OK) et/ou des conditions secondaires et/ou des conditions limites (WB) concernant une répartition locale de la température cible (TV) dans la zone cible ($\Gamma_Z$) du matériau de construction (13) sont déterminés, dans lequel une fusion du matériau de construction (13) à l'intérieur de la zone cible ($\Gamma_Z$) est provoquée sous forme de soudage par conduction thermique et, sur la base des critères d'optimisation (OK) et/ou des conditions secondaires et/ou des conditions limites (WB), au moins un profil d'intensité optimisé (IO) du faisceau d'énergie (AL) est déterminé dans le cadre d'un procédé d'optimisation, le profil d'intensité optimisé (IO) du faisceau d'énergie (AL) sur la surface d'impact (22) sur la zone de construction (8) étant essentiellement dépourvu de symétrie de rotation par rapport à un axe de faisceau (R) s'étendant coaxialement à la direction d'incidence du faisceau d'énergie (AL)
et les données de commande (BSD, PSD) étant générées de telle sorte que, lors d'une commande du dispositif (1) de fabrication additive dans le mode d'irradiation, l'irradiation du matériau de construction (13) avec un faisceau d'énergie (AL) s'effectue essentiellement avec le profil d'intensité optimisé (IO) déterminé.

2. Procédé selon la revendication 1, dans lequel, sur la base des critères d'optimisation (OK) et/ou des conditions secondaires et/ou des conditions marginales (WB), on détermine en outre au moins l'un des paramètres de procédé (WP) suivants:

- intensité du rayonnement;
- au moins une extension de faisceau (d) et/ou une forme à la surface d'impact (22) du faisceau d'énergie (AL) sur la zone de construction (8);
- vitesse de déplacement de la surface d'impact (22) du faisceau d'énergie (AL) sur la zone de construction (8);
- épaisseur de la couche;
- stratégie d'irradiation.

**3.** Procédé selon la revendication 1 ou 2, dans lequel la zone cible ($\Gamma_Z$) et éventuellement un environnement ($\Gamma_U$) autour de la zone cible ($\Gamma_Z$) sont divisés en zones de procédé (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$), la disposition spatiale relative des zones de procédé (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$) les uns par rapport aux autres est défini par rapport à un système de coordonnées (x, y, z) fixe par rapport au faisceau d'énergie (AL), et dans lequel différents critères d'optimisation (OK) et/ou conditions secondaires et/ou conditions limites (WB) sont associés à différentes zones de procédé (PZ, $\Gamma_S$, $\Gamma_{SA}$, $\Gamma_{SP}$, $\Gamma_{WS}$, $\Gamma_{WP}$, $\Gamma_{WSA}$, $\Gamma_{WSP}$, $\Gamma_{WPA}$, $\Gamma_{WPP}$).

**4.** Procédé selon l'une des revendications précédentes, dans lequel, lors de la détermination des critères d'optimisation (OK) et/ou des conditions secondaires et/ou des conditions marginales (WB) concernant une répartition locale de la température cible (TV), au moins une caractéristique de matériau (MK) du matériau de construction (13) est prise en compte, de préférence au moins l'un des paramètres suivants :

- valeurs caractéristiques pour la description des transformations de phase du matériau de construction ;
- vitesses de refroidissement et points de maintien de la température ;
- gradients spatiaux de température ;
- coefficient de conductivité thermique ;
- capacité thermique ;
- densité ;
- conductivité thermique ;
- tension superficielle ;
- enthalpie de conversion de phase ;
- température d'ébullition ou d'évaporation ;
- température de fusion.

**5.** Procédé selon l'une des revendications précédentes, dans lequel au moins un critère d'optimisation (OK) se rapporte à au moins un des paramètres suivants :

- température locale ;
- gradient de température local ;
- vitesse de refroidissement ;
- puissance du faisceau d'énergie ;
- vitesse de déplacement de la surface d'impact du faisceau d'énergie sur la zone de construction.

**6.** Procédé selon l'une des revendications précédentes, dans lequel, pour déterminer les critères d'optimisation (OK) et/ou les conditions secondaires et/ou marginales (WB) concernant une distribution locale de température cible (TV), on détermine au moins l'une des grandeurs cibles (ZG) suivantes :

- évolution de la température en fonction du temps ;
- gradient local de température cible ;
- Profondeur cible du bain de fusion ;
- qualité de surface cible ;
- Taux de construction cible ;
- Ecart par rapport à la température maximale ;
- forme de bain de fusion cible.

**7.** Procédé selon l'une quelconque des revendications précédentes, dans lequel au moins une condition secondaire et/ou marginales (WB) se rapporte au respect d'au moins l'un des paramètres ou spécifications suivants :

- Température maximale ;
- Température minimale ;
- Courbe de température continue à une limite de zone entre deux zones de procédé voisines ;
- profondeur minimale du bain de fusion.

**8.** Procédé selon l'une des revendications précédentes, dans lequel le profil d'intensité présente une zone maximale dans une région de la surface d'impact (22) sur la zone de construction (8), de préférence une zone maximale déplacée vers l'avant dans une direction de déplacement (s) du faisceau d'énergie (AL) sur la zone de construction (8) à partir de l'axe (R) du faisceau.

**9.** Procédé selon l'une des revendications précédentes, dans lequel la surface d'impact (22) du faisceau d'énergie (AL) sur la zone de construction (8) présente une largeur de faisceau (b) d'au moins 400 μm, de préférence d'au moins 600 μm, de manière particulièrement préférée d'au moins 800 μm.

**10.** Procédé selon l'une quelconque des revendications précédentes, dans lequel, dans un autre mode d'irradiation, le faisceau d'énergie (AL) est généré de manière à provoquer une fusion du matériau de construction (13) à l'intérieur de la zone cible ($\Gamma_Z$) sous forme d'un soudage profond.

**11.** Procédé de commande d'un dispositif (1) de fabrication additive d'un produit manufacturé (2), dans lequel des données de commande (BSD, PSD) pour le dispositif (1) sont générées selon un procédé selon l'une des revendications 1 à 10 et la commande du dispositif (1) est effectuée en utilisant ces données de commande (BSD, PSD).

**12.** Dispositif de génération de données de commande (54, 54') pour la génération de données de commande (BSD, PSD) pour un dispositif (1) de fabrication additive d'un produit de fabrication (2) dans un procédé de fabrication, dans lequel un matériau de construction (13) est construit et consolidé de manière sélective, dans lequel, pour la solidification sur une zone de construction (8), on effectue une irradiation du matériau de construction (13) avec au moins un faisceau d'énergie (AL), une surface d'impact (22) du faisceau d'énergie (AL) étant déplacée sur la zone de construction (8) pour faire fondre le matériau de construction (13) dans une zone cible ($\Gamma_Z$) dans et autour de la surface d'impact (22),

dans lequel le dispositif de génération de données de commande (54, 54') est ainsi conçu, en ce que, pour générer les données de commande (BSD, PSD) pour au moins un mode d'irradiation, des critères d'optimisation (OK) et/ou des conditions secondaires et/ou marginales (WB) concernant une répartition locale de température cible (TV) du matériau rapporté (13) dans la zone cible ($\Gamma_Z$) sont déterminés, pour laquelle une fusion du matériau rapporté (13) à l'intérieur de la zone cible ($\Gamma_Z$) est provoquée sous forme de soudage par conduction thermique, et sur la base des critères d'optimisation (OK) et/ou des conditions secondaires et/ou des conditions marginales (WB), au moins un profil d'intensité optimisé (IO) du faisceau d'énergie (AL) est déterminé dans le cadre d'un procédé d'optimisation, le profil d'intensité optimisé (IO) du faisceau d'énergie (AL) sur la surface d'impact (22) sur la zone de construction (8) étant essentiellement dépourvu de symétrie de rotation par rapport à un axe de faisceau (R) s'étendant coaxialement à la direction d'incidence du faisceau d'énergie (AL), et en ce que les données de commande (BSD, PSD) sont générées de telle sorte que, lors d'une commande du dispositif (1) pour la fabrication additive dans le mode d'irradiation, l'irradiation du matériau de construction (13) est effectuée avec un faisceau d'énergie (AL) ayant essentiellement le profil d'intensité déterminé.

**13.** Dispositif de commande (50) pour un dispositif (1) de fabrication additive d'un produit de fabrication (2) dans un procédé de fabrication, dans lequel un matériau de construction (13) est constitué et consolidé de manière sélective, dans lequel, pour la solidification sur une zone de construction (8), on effectue une irradiation du matériau de construction (13) avec au moins un faisceau d'énergie (AL), une surface d'impact (22) du faisceau d'énergie (AL) étant déplacée sur la zone de construction (8) afin de faire fondre le matériau de construction (13) dans une zone cible dans et autour de la surface d'impact (22),

dans lequel le dispositif de commande (20) comprend un dispositif de génération de données de commande (54) selon la revendication 12 ou une interface avec un dispositif de génération de données de commande (54') selon la revendication 12 pour fournir des données de commande (BSD, PSD) et est conçu pour commander le dispositif (1) pour irradier le matériau de construction (13) avec le faisceau d'énergie (AL) en utilisant ces données de commande (BSD, PSD).

**14.** Dispositif (1) pour la fabrication additive de produits de fabrication (2) dans un procédé de fabrication additive avec au moins un dispositif d'alimentation (16) pour l'introduction de matériau de construction (13) dans une chambre de procédé (3), un dispositif d'irradiation (20) pour la solidification sélective du matériau de construction (13) par irradiation au moyen d'un faisceau d'énergie (AL) ainsi qu'un dispositif de commande (50) selon la revendication 13.

**15.** Produit de programme informatique comprenant un programme informatique qui peut être exécuté directement dans un dispositif de mémoire d'une unité informatique, en particulier d'un dispositif de commande (50) d'un dispositif (1) de fabrication additive de produits manufacturés (2), comprenant des sections de programme pour exécuter toutes les étapes du procédé selon l'une des revendications 1 à 10, lorsque le programme informatique est exécuté dans l'unité informatique, en particulier le dispositif de commande (50).

16. Données de commande (BSD, PSD) pour la commande d'un dispositif (1) de fabrication additive, lesquelles données de commande (BSD, PSD) sont conçues de telle sorte qu'elles commandent le dispositif (1) de fabrication additive de telle sorte qu'une fabrication d'un produit de fabrication (2) s'effectue en utilisant un procédé selon la revendication 11, et/ou dans lequel les données de commande (BSD, PSD) ont été établies avec un procédé selon l'une des revendications 1 à 10.

**FIG. 1**

FIG. 2

FIG. 3

**FIG. 4**

**FIG. 5**

FIG. 6

FIG. 7

FIG.8

**FIG. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **TIEN T. RÖHLING et al.** Modulating laser intensity profile ellipticity for microstructural control during metal additive manufacturing. *Acta Materialia,* 2017, vol. 128, 197-206
- **PERETYAGIN P YU et al.** *Track geometry in selective laser melting,* ISSN 1068-798X
- **OKUNKOVA ANNA et al.** Experimental Approbation of Selective Laser Melting of Powders by the Use of Non-Gaussian Power Density Distributions. *Selective Laser Melting.,* ISSN 1875-3892
- **YU JUN et al.** Material Properties of Ti6Al4 v Parts Produced by Laser Metal Deposition. *Selective Laser Melting.*